(19) Europäisches Patentamt / European Patent Office / Office européen des brevets

(11) **EP 3 924 696 B1**

(12) **EUROPÄISCHE PATENTSCHRIFT**

(45) Veröffentlichungstag und Bekanntmachung des Hinweises auf die Patenterteilung:
**10.04.2024 Patentblatt 2024/15**

(21) Anmeldenummer: **20707557.3**

(22) Anmeldetag: **11.02.2020**

(51) Internationale Patentklassifikation (IPC):
**G01D 5/249** (2006.01)    **G01D 5/347** (2006.01)

(52) Gemeinsame Patentklassifikation (CPC):
**G01D 5/2495; G01D 5/2492;** G01D 5/34792

(86) Internationale Anmeldenummer:
**PCT/DE2020/100090**

(87) Internationale Veröffentlichungsnummer:
**WO 2020/164666 (20.08.2020 Gazette 2020/34)**

(54) **POSITIONSMESSVORRICHTUNG ZUR MESSUNG EINER ABSOLUTPOSITION**

POSITION-MEASURING DEVICE FOR MEASURING AN ABSOLUTE POSITION

DISPOSITIF DE MESURE DE POSITION POUR MESURER UNE POSITION ABSOLUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2019 DE 102019103465**

(43) Veröffentlichungstag der Anmeldung:
**22.12.2021 Patentblatt 2021/51**

(73) Patentinhaber: **iC-Haus GmbH**
**55294 Bodenheim (DE)**

(72) Erfinder:
• **FISCHER, Peter**
**55294 Bodenheim (DE)**
• **HERZ, Manfred**
**55130 Mainz (DE)**
• **KÜLLER, Christian**
**55270 Essenheim (DE)**
• **WACHTER, Christian**
**64372 Ober-Ramstadt (DE)**
• **SCHERNER, Hartmut**
**55296 Gau-Bischofsheim (DE)**

(74) Vertreter: **Feder Walter Ebert**
**Partnerschaft von Patentanwälten mbB**
**Achenbachstrasse 59**
**40237 Düsseldorf (DE)**

(56) Entgegenhaltungen:
DE-A1- 3 825 097          DE-A1-102011 050 834
DE-A1-102014 112 459     DE-T2- 69 308 034
US-A- 5 998 784

Processed by Luminess, 75001 PARIS (FR)

**Beschreibung**

Die vorliegende Erfindung betrifft eine Positionsmessvorrichtung zur Messung einer Absolutposition mit einer einen Binärcode aufweisenden Maßverkörperung und einer den Binärcode abtastenden Sensorvorrichtung, wobei die Sensorvorrichtung zur Abtastung eines ersten Binärcodes mit einer ersten Anzahl, die gleiche Codewort-Länge aufweisenden Codewörtern ausgebildet ist. Die Erfindung betrifft ferner ein entsprechendes Verfahren zur Messung einer Absolutposition mit einer Positionsmessvorrichtung.

Die Erfindung kann eingesetzt werden bei Positionsmessvorrichtungen, welche in vielen Bereichen der Technik zur Erfassung von Bewegungen und/oder Positionen von Bauteilen, beispielsweise einer Welle oder eines Schlittens, verwendet werden. Hierzu wird entweder an dem zu erfassenden Bauteil eine Maßverkörperung oder eine Sensorvorrichtung angeordnet, wobei die Relativbewegung der Maßverkörperung gegenüber der Sensorvorrichtung erfasst werden kann. Bei entsprechenden Positionsmessvorrichtungen wird die Maßverkörperung von der Sensorvorrichtung abgetastet, wobei die Maßverkörperung mit dem zu messenden Bauteil derart verbunden und ausgestaltet ist, dass die Sensorvorrichtung jede Position des zu messenden Bauteils, insbesondere auch im Stillstand, eindeutig erfassen kann. Zur Messung der Absolutposition ist die jeweils aktuelle Relativanordnung zwischen der Maßverkörperung und der Sensorvorrichtung ausreichend.

Zur Positionsmessung sind verschiedene Sensorprinzipien bekannt, wie etwa optische oder magnetische Verfahren. So sind beispielsweise optische Positionsmessvorrichtungen bekannt, bei welchen die Maßverkörperung mit einer Lichtquelle bestrahlt und das auf die Maßverkörperung treffende Licht nach einem bestimmten Muster moduliert wird. Die Maßverkörperung kann hierzu aus unterschiedlich reflektierenden Bereichen oder aus lichtdurchlässigen und lichtundurchlässigen Bereichen bestehen. Es kann eine Durchlicht- oder Reflexionsanordnung verwendet werden. Das modulierte Licht kann von der Sensorvorrichtung detektiert und in ein Positionssignal umgewandelt werden. Darüber hinaus sind auch magnetische Positionsmessvorrichtungen bekannt, bei welchen die Maßverkörperung unterschiedlich polarisierte, magnetische Bereiche aufweist. Die im Stillstand erkannten Magnetfelder und/oder die durch die Bewegung der Maßverkörperung hervorgerufenen Magnetfeldänderungen können dann von der Sensorvorrichtung, wie beispielsweise Hallsensoren, detektiert werden. Auf diese Weise lassen sich weitgehend sinus- und cosinusförmige Sensorsignale erzeugen, welche ausgewertet werden können und so Aufschluss über die Position des Bauteils geben. Derartige Positionsmessvorrichtungen sind beispielsweise aus der DE 10 2011 050 834 A1 oder der DE 10 2014 112 459 A1 bekannt.

Positionsmessvorrichtungen können ferner entweder als lineare Positionsmessvorrichtungen, welche Linearbewegungen und/oder Linearpositionen des Bauteils erfassen, oder als Rotationspositionsmessvorrichtung zur Erfassung von Drehbewegungen und/oder Winkelpositionen des Bauteils ausgebildet sein. Hierzu kann die Maßverkörperung einen linearen oder radialen Maßstab der Maßverkörperung aufweisen.

Die Code-Positionen auf der Maßverkörperung können mittels eines digitalen Codes, wie beispielsweise ein Binärcode, codiert sein, wobei die einzelnen Bereiche der Maßverkörperung entsprechend je einem Bit des Binärcodes ausgestaltet sind, wobei die einzelnen Bereiche aneinandergefügt die einzelnen Codewörter einer vorgegebenen Codewort-Länge des Binärcodes bilden.

Bekannte Positionsmessvorrichtungen zur Bestimmung der Absolutposition weisen Maßverkörperungen auf, welche mehrere nebeneinander angeordnete Positionsspuren aufweisen. In diesem Fall kann die Absolutposition mit mehreren, senkrecht zur Bewegungsrichtung angeordneten Sensorelementen ausgelesen werden. Nachteilig bei derartigen Lösungen ist jedoch, dass bei längeren Binärcodes viele Positionsspuren benötigt werden, die dann parallel auf einer vergleichsweise großen Breite der Maßverkörperung abgetastet werden oder entsprechend dicht zusammenliegen, was zu Übersprechen und einer geringeren Justagetoleranz führen kann.

Alternativ sind daher Positionsmessvorrichtungen bekannt, welche Maßverkörperungen mit einspurigen Schiebecodes aufweisen. In diesem Fall erfolgt die Codierung der Positionsinformation in einer einzigen Positionsspur mit in Bewegungsrichtung hintereinander angeordneten codierten Bereichen und ein Auslesen der Informationen mittels in Bewegungsrichtung hintereinander angeordneten Sensorelementen. Im Sensorbereich wird dann eine Anzahl an Bits erfasst und der Binärcode bei der Bewegung relativ zu der Sensorvorrichtung verschoben, wodurch sich die Position der Bits innerhalb des Codeworts jeweils um 1 ändert, wobei ein Bit den von der Sensorvorrichtung erfassten Bereich auf der einen Seite verlässt und ein anderes Bit auf der anderen Seite in diesen eintritt.

Der Sensorvorrichtung kann eine Weiterverarbeitungseinheit nachgeschaltet sein, welche einen Code-Wandler beinhalten kann, der die Umsetzung des Codes in fest zugeordnete Code-Positionen leistet.

Die beschriebenen Positionsmessvorrichtungen können auch Basis der Erfindung sein und die Erfindung bei diesen Anwendung finden. Auch die verschiedenen Sensorprinzipien können bei der Erfindung eingesetzt werden.

Derartige Positionsmessvorrichtungen haben sich zwar in der Vergangenheit bewährt. Allerdings hat es sich als nachteilig erwiesen, dass, insbesondere aufgrund einer festen Länge der Sensorelemente der Sensorvorrichtung in Bewegungsrichtung und der damit korrelierenden Länge der Bereiche bzw. der Bitfolge auf der Maßverkörperung, die jeweilige Sensorvorrichtung jeweils nur für eine Positionsmessvorrichtung mit einer Maßverkörperung einer bestimmten Größe verwendet werden kann. Für rotative Positionsmessvorrichtungen bedeutet dies, dass durch die vorgegebene Länge eines Bits und die Anzahl der Bits im vollständigen Binärcode auch der Radius bestimmt ist, auf dem sich die Bitfolge befinden muss. Sollen daher beispielsweise rotative Maßverkörperungen mit einem kleineren oder größeren Durchmesser verwendet werden, ist es erforderlich, ein komplett neues System beispielsweise basierend auf einer geänderten Sensorvorrichtung auf einer integrierten Schaltung aufzubauen, da sonst die einzelnen Bereiche nicht mehr korrekt von der Sensorvorrichtung erfasst werden können. Bleibt die Länge eines Bits unverändert und/oder ohne Anpassung der Bitlänge auf der Sensorvorrichtung zu der auf der Maßverkörperung, entstehen Unstetigkeiten oder im ungünstigsten Fall sogar nicht eindeutige Code-Positionen, wenn zwei Code-Positionen mit derselben Codierung existieren.

Aus der US 5 998 784 A ist ein inkrementeller Encoder mit Indexspur bekannt, die eine Binär-Codierung über eine Umdrehung aufweist und damit eine Information über den absoluten Winkel bietet. Diese quasi-absolute Abtastung erfolgt seriell und benötigt eine Relativ-Bewegung zur Maßverkörperung. Der gewählte Binär-Code kann vollständig oder verkürzt sein für verschiedene Maßverkörperungen. Die Zuordnung der Codewörter des verkürzten Binärcodes zu Positionswerten erfolgt über eine für den verkürzten Code hinterlegte Codewandlung. Die Codewandlung muss daher für die jeweilige Maßverkörperung jeweils vorab neu implementiert werden. Es ist nicht möglich, die gleiche Codewandlung für unterschiedliche Maßverkörperungen zu verwenden.

Die DE 693 08 034 T2 beschreibt ein Positionserfassungssystem, das eine Reihe beabstandeter Markierungen aus wenigstens zwei unterschiedlichen Zeichen und einer Abtasteinheit für die Markierungen umfasst, wobei die Markierungen in verschiedenen Gruppen einer feststehenden Anzahl von wenigstens zwei aufeinanderfolgenden Markierungen in der Reihe ausgeführt sind, wobei die Markierungen pro Gruppe stets in einer Abfolge angeordnet sind, die zu nur einer Gruppe gehört, so dass ein eindeutiger Code entsteht.

Vor diesem Hintergrund stellt sich die Erfindung die Auf g a b e, eine Positionsmessvorrichtung der eingangs genannten Art anzugeben, bei welchen die Größe, insbesondere der Durchmesser, der verwendeten Maßverkörperungen bei insbesondere gleichbleibender Codewandlung, anpassbar und dennoch ein sicheres und zuverlässiges Auslesen des Binärcodes möglich ist.

Erfindungsgemäß wird diese Aufgabe bei einer Positionsmessvorrichtung der eingangs genannten Art mit den Merkmalen des Anspruch 1 **gelöst**.

Erfindungsgemäß ist vorgesehen, dass der Binärcode der Maßverkörperung ein einen Teilbereich des ersten Binärcodes bildender Binärcode mit einer zweiten Anzahl Codewörtern ist, welche auf den ersten Binärcode abbildbar ist. Insbesondere kann dabei der Binärcode im Teilbereich des ersten Binärcodes wiedergegeben werden. Die beiden Binärcodes können eindeutige Codewörter aufweisen, welche jeweils einer eindeutigen Code-Position mit der durch die Binärcodes aufgespannten Codewort-Länge zugeordnet sind

Durch die Darstellung des zweiten Binärcodes als Teilbereich des ersten Binärcodes und insbesondere der Vorgabe einer festen Abbildungsbeziehung können die aus dem zweiten Binärcode abgeleiteten Code-Positionen den Codewörtern gleicher Codewort-Länge eindeutig zugeordnet und so zur Weiterverarbeitung des zweiten Binärcodes dieselben Funktionsblöcke sowie Positionsmessvorrichtungselemente verwendet werden, wie für den ersten Binärcode. Es ist somit nicht mehr erforderlich, für jeden Anwendungsfall eine komplett neue Positionsmessvorrichtung und/oder Sensorvorrichtung aufzubauen. Vielmehr kann die Maßverkörperung je nach Bedarf in ihrer Größe an den jeweiligen Anwendungsfall angepasst werden. Es kann eine Positionsmessvorrichtung für verschiedene Anwendungsfälle und Bauteile, insbesondere für Maßverkörperungen verschiedener Durchmesser, realisiert werden. Insbesondere kann bei der Positionsmessvorrichtung nur die Maßverkörperung ausgetauscht werden und die Sensorvorrichtung und die Weiterverarbeitungseinheit mitsamt der Codewandlung können beibehalten werden. Es ist durch die Abbildung möglich, mit der gleichen Sensorvorrichtung und Weiterverarbeitungseinheit unterschiedliche Maßverkörperungen abzutasten.

Erfindungsgemäß ist der zweite Binärcode auf den ersten Binärcode mittels einer vorgegebenen Abbildungsvorschrift abbildbar. Auf diese Weise kann die Maßverkörperung auf einfache Art und Weise an verschiedenste Positionsmessvorrichtungssysteme angepasst und der zweite Binärcode gegenüber dem ersten länger gewählten Binärcode hinsichtlich der Anzahl der Codewörter verkürzt werden. Als besonders vorteilhaft hat es sich dabei erwiesen, wenn die Abbildungsvorschrift durch eine Skalierungs- bzw. Transformationsvorschrift gebildet wird.

Die Abbildung der Binärcodes kann durch die Abbildung der den einzelnen Codewörtern der beiden Binärcodes fest zugeordneten Code-Positionen erfolgen. Die Code-Positionen des zweiten Binärcodes können auf die Codepositionen des ersten Binärcodes, insbesondere mittels einer Abbildungsvorschrift, abbildbar sein. Dies kann in folgender Form dargestellt werden:

$$P_m \rightarrow P_M$$

Besonders bevorzugt kann die Abbildung mittels einer Formel erfolgen, welche $P_m$ mit einer Funktion f mathematisch verknüpft:

$$P_m \circ f(M, m, P_S) = P_M$$

Hierbei stellt $P_M$ die ermittelte Position des ersten Binärcodes dar, auf welche die ermittelte Position $P_m$ des zweiten Binärcodes abgebildet werden kann, M die erste Anzahl, die gleiche Codewort-Länge aufweisenden Codewörtern des ersten Binärcodes, m die zweite Anzahl, die gleiche Codewort-Länge aufweisenden Codewörtern des zweiten Binärcodes und Ps die Startposition des zweiten Binärcodes innerhalb des ersten Binärcodes. Der Startposition ist hierbei auch ein Startwert S zuordbar. Die Code-Positionen $P_M$, $P_m$ und $P_S$ können dabei auf der Maßverkörperung als Winkel (in °, Grad) bei rotatorischen und als Strecke (in mm) in linearen Systemen definiert sein. Es sind auch sonstige Positionsmaße möglich.

Für $P_M$ kann die folgende Beziehung zu der zugeordneten Codenummer $CN_M$ gelten:

$$P_M = CN_M \times 360° / M$$

Für die Code-Position $P_m$ gilt im gekürzten Coderaum mit m Code-Positionen mit den Codenummern $CN_m$, die jeweils der Code-Position $P_m$ auf der verkleinerten Maßverkörperung zugeordnet sind, dementsprechend:

$$P_m = CN_m \times 360° / m.$$

Bei der Abbildung kann bevorzugt eine Skalierung und/oder eine Verschiebung berücksichtigt sein. Hierzu kann in der Funktion f eine Skalierung und/oder eine Verschiebung enthalten sein. Mit einfachen Worten kann die Skalierung hierbei angeben, wie viel vom ersten beschnittenen Binärcode im zweiten Binärcode verbleibt, und die Verschiebung kann angeben, an welcher Stelle ein Teil aus dem ersten Binärcode ausgeschnitten wurde.

Die Skalierung kann durch einen Skalierungsfaktor vorgegeben sein. Über den Skalierungsfaktor kann das Verhältnis von M und m zueinander berücksichtigt werden. Mittels der Skalierung kann das Größenverhältnis berücksichtigt werden, welches sich in der unterschiedlichen Anzahl M und m an Codewörtern widerspiegelt. Der Skalierungsfaktor kann M und m ins Verhältnis setzen. Beispielsweise kann die Skalierung auf weniger Codewörter C und damit kleinere Durchmesser der Maßverkörperung proportional m/M erfolgen.

Eine Verschiebung kann insbesondere dadurch entstehen, dass der ausgeschnittene Teilbereich sich an geeigneter Stelle des ersten Binärcodes befindet, so dass wiederum ein geschlossener Binärcode entsteht. Bezogen auf die kleinere Maßverkörperung kann der Startwert S aus dem Coderaum des beschnittenen ersten Binärcodes als neue Nullposition mit $CN_m = 0$ gesetzt werden. Dies kann eine Verschiebung der Nullposition zur Folge haben. Die dem Startwert S und damit der Nullposition auf der kleineren Maßverkörperung zugeordnete Startposition Ps der beschnittenen größeren Maßverkörperung kann wie folgt beschrieben werden:

$$P_S = S \times 360° / M$$

S als Startwert im verkürzten Coderaum des zweiten Binärcodes kann damit im Coderaum des ersten Binärcodes bestimmt werden, wodurch die Start-position Ps auf der größeren beschnittenen Maßverkörperung zur NullPosition auf der kleineren Maßverkörperung in Beziehung gesetzt wird.

Sofern der Startwert S = 0 ist, erfolgt keine Positionsverschiebung. Eine Verschiebung ist daher nicht für alle Fälle erforderlich.

Folgende Abbildungsvorschrift V kann zur Beschreibung des Abbildungsverhältnisses zwischen $P_M$ und $P_m$ verwendet werden:

$$P_M = m/M * P_m + P_S$$

Diese Abbildungsvorschrift beinhaltet damit sowohl eine durch m/M ausgedrückte Skalierung m/M als auch eine durch $P_s$ ausgedrückte Verschiebung.

Die Abbildung kann daher unter Berücksichtigung eines Skalierungsfaktors und/oder einer Positionsverschiebung erfolgen. Hierbei kann der Skalierungsfaktor die erste Anzahl an Codewörtern und die zweite Anzahl an Codewörtern (C) ins Verhältnis zueinander setzen.

Die Abbildungsvorschrift V beschreibt die Abbildungsbeziehung zwischen $P_M$ und $P_m$. Da in der praktischen Anwendung der Erfindung $P_m$ die zu ermittelnde Größe ist, kann die Abbildungsvorschrift V auch wie folgt umgestellt werden:

$$P_m = (M/m) * (P_M - P_S)$$

Bevorzugt beinhaltet die Abbildungsvorschrift V, dass der erste Binärcode mit dem diesen zugeordneten Code-Positionen $P_M$, von denen vorzugsweise die Startposition Ps des zweiten Binärcodes abziehbar ist, durch Multiplikation mit einem vorgegeben Faktor, insbesondere der ersten Anzahl M an Codewörtern zu der zweiten Anzahl m an Codewörtern, auf den Wertebereich des zweiten Binärcodes abbildbar ist.

Bevorzugt ist ferner, wenn die Binärcodes eindeutige Codewörter aufweisen, welche jeweils einer eindeutigen Code-Position innerhalb der durch die Binärcodes aufgespannten Codewort-Länge zugeordnet sind. Durch eine eindeutige Aneinanderreihung von binären Codewörtern kann erreicht werden, dass das Auslesen der Maßverkörperung mittels der Sensorvorrichtung direkt und ohne weitere Messung zur Ermittlung der Absolutposition durchgeführt werden kann. Bei einer bitweisen Verschiebung der Maßverkörperung gegenüber der Sensorvorrichtung kann eine bestimmte Abfolge von binären Codewörtern mit einer vorgegebenen Codewort-Länge erzeugt werden, wobei jedes Codewort nur genau einmal vorkommt. Da jedes Codewort nur einmal vorkommt, kann insoweit jedem Codewort genau eine Code-Position zugeordnet werden. Die Codewörter des ersten Binärcodes und des zweiten Binärcodes können bevorzugt die gleiche Codewort-Länge, insbesondere L-Bit, aufweisen. Als besonders vorteilhaft haben sich Codewörter mit einer Codewort-Länge zwischen fünf und 16 Bit erwiesen. Die Codewort-Länge kann dabei jedoch, insbesondere in Abhängigkeit der Anzahl an Codewörtern, gewählt werden.

Ferner vorteilhaft ist, wenn die im zweiten Binärcode verbleibenden Codewörter die gleiche Reihenfolge aufweisen, wie die Codewörter, insbesondere in einem Teilbereich, des ersten Binärcodes. Auf diese Weise ist eine einfache Abbildung und damit eine Übertragung des zweiten Binärcodes auf den ersten Binärcode und so eine Verwendung der für den ersten Binärcode ausgebildeten Sensorvorrichtung auf einfache Art und Weise möglich. Eine eindeutige Zuweisung kann derart gewährleistet werden.

Ferner vorteilhaft ist, wenn die Maßverkörperung einspurig und/oder mehrspurig mit mindestens einer Positionsspur mit binären Positionsmarkierungen ausgebildet ist. Die Absolutposition kann so auf einfache Art und Weise ausgelesen werden. Die Positionsmarkierungen können dabei bevorzugt von den codierten Bereichen der Maßverkörperung und insbesondere von den reflektierenden und/oder transmittierenden und/oder polarisierten Bereichen der Maßverkörperung gebildet werden. Besonders bevorzugt können auch weitere Spuren, wie eine Indexspur, eine zweite, bevorzugt auch invertierte Absolutspur, eine Inkrementspur oder dergleichen vorgesehen sein, so dass die Maßverkörperung insbesondere differentiell und/oder im Zuge einer Array-Abtastung abgetastet oder durch Interpolation feiner unterteilt werden kann.

Ferner wird vorgeschlagen, dass der erste Binärcode mittels eines Pseudo-Zufallszahlengenerators erzeugbar ist. Hierzu kann, insbesondere bei einem gegebenen Startwert, eine pseudo-zufällige Bitfolge erzeugt werden, welche sich zyklisch wiederholt. Mittels entsprechender Pseudo-Zufallszahlengeneratoren können bevorzugt Binärcodes maximaler Länge erzeugt werden. Dabei wird durch den Generator jede mögliche Bitkombination erzeugt, bevor eine Wiederholung eintritt. Die vorhandene Hardware kann hierdurch bestmöglich genutzt werden. Auf diese Weise kann eine pseudozufällige Verteilung der einzelnen Bereiche der Maßverkörperung generiert werden, wobei die einzelnen Bereiche den einzelnen Bits des Binärcodes entsprechen können. Die einzelnen codierten Bereiche sind dabei hintereinander angeordnet, so dass eine bestimmte Anzahl von aufeinanderfolgenden Bereichen der Maßverkörperung jeweils ein Codewort bildet, das die absolute Code-Position eindeutig definiert. Bei der Verschiebung der Maßverkörperung um ein einziges Bit wird bereits ein neues Codewort gebildet und über den gesamten absolut zu erfassenden Umfang steht eine Folge von unterschiedlichen Codewörtern zur Verfügung. Ein derartiger serieller bzw. sequenzieller Code wird auch oft als Kettencode oder als Pseudo-Random-Code bezeichnet.

Eine weitere Ausführungsform sieht eine Weiterverarbeitungseinheit zur Weiterverarbeitung der abgetasteten Sensorsignale vor. Besonders bevorzugt kann die Weiterverarbeitungseinheit derart ausgestaltet sein, dass diese mittels der Sensorvorrichtung aufgenommene Code-Positionssignale unterschiedlichster Maßverkörperungen weiterverarbeiten kann. Insbesondere kann die Weiterverarbeitungseinheit einen Funktionsblock beinhalten, welcher inkrementelle Signale erzeugt. Alternativ oder zusätzlich können auch Kommutierungssignale erzeugt werden. Bevorzugt können in der Weiterverarbeitungseinheit aus den ermittelten Codewörtern und insbesondere den daraus ermittelten Code-Positionen weitere Signale, wie beispielsweise inkrementelle AB-Signale, als Maß für die Geschwindigkeit und/oder Bewegungsrichtung ermittelt werden. Die Weiterverarbeitungseinheit kann als Zähler ausgebildet sein, der einen Multiturnwert oder in Linearsystemen einen Mehrfach-Längen-Wert bildet. Des Weiteren kann die Weiterverarbeitungseinheit eine Schnittstelle, wie beispielsweise BiSS, SPI oder dergleichen, sein.

Gemäß einer vorteilhaften Ausgestaltung erfolgt die Umsetzung der abgetasteten Codewörter im Coderaum in Positionen mittels eines Look-Up-Tables und/oder mittels eines zur Rückkopplung dekodierten Schieberegisters. Alternativ oder zusätzlich können auch andere mathematische Verfahren Anwendung finden. Auf diese Weise kann unabhängig von der verwendeten Positionsmessvorrichtung und/oder der verwendeten Maßverkörperung der mittels der Sensorvorrichtung ermittelte Binärcode in eine eindeutige Position umgewandelt werden. Hierdurch kann die Position ermittelt und weiterverarbeitet werden. Für die Weiterverarbeitung des zweiten Binärcodes können auf diese Weise dieselben Funktions- und/oder Schaltungsblöcke verwendet werden wie für den ersten Binärcode und die Umsetzung kann, insbesondere in der der Sensorvorrichtung nachgeschalteten Weiterverarbeitungseinheit, vorgenommen werden.

Weiter vorteilhaft ist es, wenn der erste Binärcode mit einer ersten Anzahl, die gleiche Codewort-Länge aufweisenden Codewörter ein vollständiger Code ist. Als vollständige Binärcodes im Sinne der Erfindung können dabei derartige Codes verstanden werden, bei welchen im Coderaum alle möglichen Codewörter vorkommen. Insbesondere kann es sich bei einem vollständigen Binärcode um einen Code handeln, bei welchem alle möglichen $M=2^L$ Bitkombinationen auftreten, wobei M die erste Anzahl Codewörter und L die Codewort-Länge beschreibt.

Bevorzugt ist ferner, wenn der erste und/oder zweite Binärcode ein geschlossener Code ist, bei welchem beim Überschreiten des letzten Codeworts, insbesondere der letzten Code-Position, wieder das erste Codewort, insbesondere die erste Code-Position, folgt. Ein geschlossener Code kann insbesondere aufeinanderfolgende Codewörter aufweisen, bei welchem sich vorhergehende oder folgende Codewörter durch eine Schiebeoperation um jeweils 1 Bit erzeugen lassen. Bevorzugt kann der Code zyklisch ausgebildet sein. Ein entsprechender geschlossener Binärcode weist bevorzugt keinen Sprung, auch nicht am Ende des Codes zurück zum Anfang des Codes auf. Im Falle des zweiten Binärcodes ist dieses Verhalten im Wesentlichen mit dem Verhalten des insbesondere vollständigen ersten Binärcodes auch zu Beginn und Ende des Bereiches mit gegenüber dem ersten Binärcode ausgelassenen Codeworten zu vergleichen und kann daher in vergleichbarer Art und Weise mit geringem Aufwand behandelt werden. Codesprünge können auf diese Weise im Bereich des kompletten zweiten Binärcodes vermieden werden.

In konstruktiver Hinsicht wird ferner vorgeschlagen, dass die Maßverkörperung als rotatorische Maßverkörperung, insbesondere als Kreisscheibe oder Walze, ausgebildet ist. In diesem Fall kann eine Abbildung eines zweiten Binärcodes, insbesondere als gleicher Teilbereich, auf den ersten Binärcode auf einfache Art und Weise erfolgen, insbesondere dann, wenn der Binärcode als geschlossener Code ausgebildet ist.

Eine weitere Ausgestaltung sieht vor, dass zur Abbildung des zweiten Binärcodes auf den ersten Binärcode eindeutige Code-Positionen durch Start- und Endwert oder durch die zweite Anzahl an Codewörtern m und den Start- oder Endwert des zweiten Binärcodes innerhalb des ersten Binärcodes in der Weiterverarbeitungseinheit vorgegeben ist. Auf diese Weise kann eine Korrelation zwischen den beiden Binärcodes an das auswertende System in der Weiterverarbeitungseinheit vorgenommen werden. So kann beispielsweise die Positionsausgabe so angepasst werden, dass immer Code-Positionen zwischen 0 und M-1 ausgegeben werden, wobei M die erste Anzahl Codewörter des ersten Binärcodes darstellt. Vorteilhaft ist, wenn für die Auswertung die Startposition und die Endposition vorgegeben werden, um die Suche und das Nachlaufen auf diesen Bereich einzuschränken und die genau einmal vorhandene Übereinstimmung der Binärcodes zu finden.

Es ist ausreichend, wenn mindestens zwei der drei Parameter

- Startwert S innerhalb des ersten Binärcodes,
- Endwert E innerhalb des ersten Binärcodes und/oder
- Anzahl m der zweiten Codewörter

der Weiterverarbeitungseinheit für die jeweils zu verwendende Maßverkörperung zur Durchführung der Abbildung vorgegeben werden. Die Anzahl M der ersten Codewörter ist der Weiterverarbeitungseinheit ohnehin durch die hinterlegte Codewandlung bekannt und kann dort als feste Größe hinterlegt sein. Über die Beziehung m = M - (S - E - 1) lassen sich die Größen umrechnen.

Ferner vorteilhaft ist, wenn der zweite Binärcode eine Startposition an der Startadresse aufweist, welche zur Abbildung des zweiten Binärcodes auf den ersten Binärcode von der aktuellen Code-Position der Maßverkörperung abziehbar ist. Somit kann auf diese einfache Art und Weise eine Korrelation zwischen dem zweiten Binärcode und dem ersten Binärcode hergestellt und eine Abbildung erreicht werden.

In einer Weiterbildung der Erfindung wird vorgeschlagen, dass die Sensorvorrichtung mindestens eine Vielzahl Sensorelemente aufweist, so dass die gesamte Codewort-Länge L eines Codeworts gleichzeitig oder nacheinander, insbesondere teilweise oder gänzlich nacheinander, erfasst werden kann. Besonders bevorzugt kann die Anzahl an Sensorelementen der Codewort-Länge L entsprechen. Die Sensorelemente können je nach Anwendungsfall bevorzugt als fotosensitive Sensoren, insbesondere als Fotodioden und/oder als Magnetfeldsensoren, insbesondere Hallsensoren, ausgebildet sein, mittels welcher die von der Maßverkörperung modulierte Änderung besonders effektiv und einfach gemessen und in eine entsprechende Signalstärke umgewandelt werden kann.

Bevorzugt ist, wenn die Positionsmessvorrichtung als messende oder zählende Positionsmessvorrichtung ausgebildet ist. Bei einer Ausgestaltung als messendes System kann zur Ermittlung der Position eine Messung vorgenommen werden, bei welcher Code-Positionen erfasst werden, die sich innerhalb des verwendeten Binärcodes befinden. Die Auswertung der Signale kann bevorzugt von der Weiterverarbeitungseinheit durchgeführt werden, wobei die ausgegebenen Positionen bevorzugt über den gesamten Binärcode stetig sein können.

Als zählendes System werden insbesondere Positionsmessvorrichtungen bezeichnet, bei welchen nach Erkennung eines Codewortes oder Indexsignals über diesen hinaus weitergezählt wird, bis wieder eine Synchronisation und/oder Überprüfung mit einem gemessenen Wert stattfindet. Die zwischenzeitlich bei Drehung oder Bewegung durch Zählung ermittelte Code-Position kann sich im Fall des zweiten Binärcodes jedoch auch außerhalb des verwendeten Codebereichs befinden. Aufgrund dessen kann bei Bedarf eine Korrektur durch die Weiterverarbeitungseinheit vorgenommen werden. Hierzu kann bei Erreichen der ersten Trennstelle des zweiten Binärcodes durch die Weiterverarbeitungseinheit zur zweiten Trennstelle des zweiten Binärcodes gesprungen und dort weiter gezählt werden.

Bei einem Verfahren der eingangs genannten Art wird die Aufgabe mit den Merkmalen des Anspruch 14 **gelöst**.

Erfindungsgemäß ist auch bei dem Verfahren vorgesehen, dass der Binärcode der Maßverkörperung ein einen Teilbereich des ersten Binärcodes bildender Binärcode mit einer zweiten Anzahl Codewörtern ist, welcher auf den ersten Binärcode abgebildet wird.

Es ergeben sich die bereits im Zusammenhang mit der Positionsmessvorrichtung beschriebenen Vorteile. Sämtliche Merkmale der Positionsmessvorrichtung können einzeln oder in Kombination auch bei dem erfindungsgemäßen Verfahren Anwendung finden.

Wie bereits beschrieben können insbesondere die beiden Binärcodes eindeutige Codewörter aufweisen, welche jeweils einer eindeutigen Code-Position mit der durch die Binärcodes aufgespannten Codewort-Länge zugeordnet sind.

Die Code-Positionen des zweiten Binärcodes können auf die Codepositionen des ersten Binärcodes, insbesondere mittels einer Abbildungsvorschrift (V), abgebildet werden. Die Abbildung kann unter Berücksichtigung eines Skalierungsfaktors und/oder einer Positionsverschiebung erfolgen. Der Skalierungsfaktor kann die erste Anzahl M an Codewörtern und die zweite Anzahl m an Codewörtern ins Verhältnis zueinander setzen.

Weitere Einzelheiten und Vorteile der Erfindung sollen nachfolgend anhand der in den Zeichnungen dargestellten Ausführungsbeispiele näher erläutert werden. Hierin zeigt:

Fig. 1a     eine Positionsmessvorrichtung mit einer einen ersten Binärcode aufweisenden Maßverkörperung;

Fig. 1b     eine tabellarische Darstellung eines Ausführungsbeispiels eines ersten Binärcodes gemäß Fig. 1a;

Fig. 2     eine Maßverkörperung gemäß Fig. 1, welche um einen vorgegebenen ausgeschnittenen Bereich gekürzt wurde, so dass nur ein Teilbereich des ersten Binärcodes aus Fig. 1a verbleibt;

Fig. 3a     eine Positionsmessvorrichtung mit einer einen Teilbereich des ersten Binärcodes bildenden zweiten Binärcode aufweisenden verkleinerten Maßverkörperung;

Fig. 3b     eine tabellarische Darstellung eines Ausführungsbeispiels eines zweiten Binärcodes gemäß Fig. 3a;

Fig. 4     die Anordnung gemäß Fig. 1a;

Fig. 5     die Anordnung gemäß Fig. 2;

Fig. 6     die Anordnung gemäß Fig. 3a; und

Fig. 7     ein Blockschaltbild einer Positionsmessvorrichtung mit einer Weiterverarbeitungseinheit.

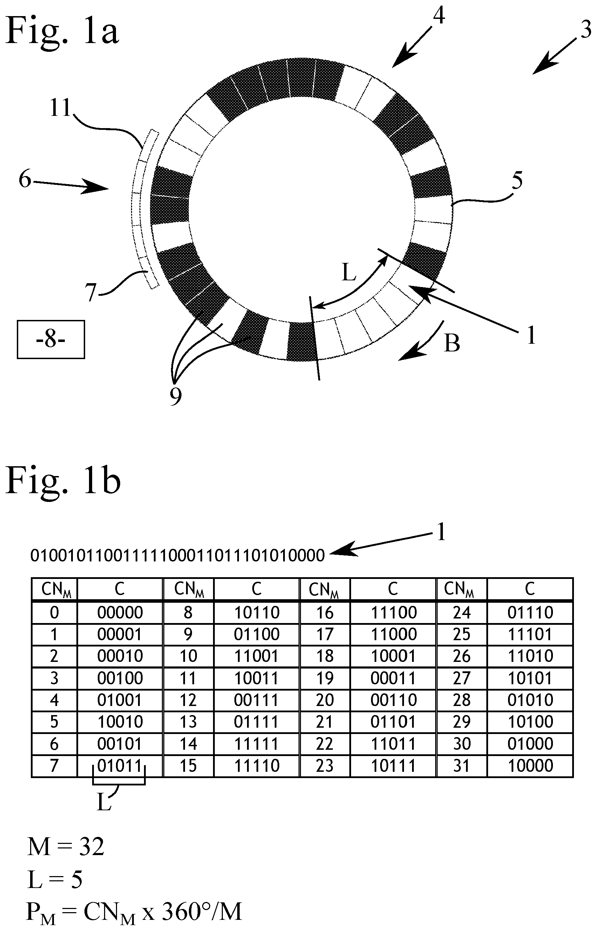

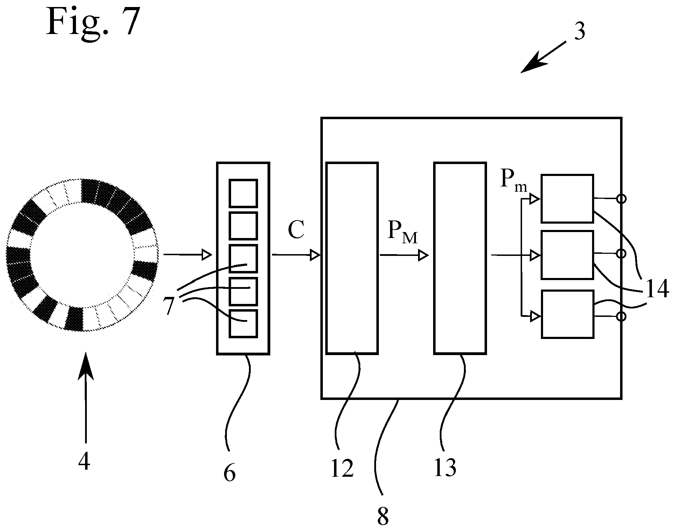

In den Fig. 1 bis 3 sind Teile einer Positionsmessvorrichtung 3 dargestellt, welche in den verschiedensten Bereichen der Technik zur Ermittlung der Absolutposition eines nicht näher dargestellten Bauteils verwendet werden kann. In Fig. 7 ist das Blockschaltbild einer Positionsmessvorrichtung 3 mit einer Aufteilung in Funktionsblöcke dargestellt.

Die Positionsmessvorrichtung 3 kann je nach Bedarf als optische oder als magnetische Positionsmessvorrichtung 3 ausgebildet sein. Eine solche Positionsmessvorrichtung 3 kann eine Maßverkörperung 4 sowie eine Sensorvorrichtung 6 aufweisen. Im Falle einer optischen Positionsmessvorrichtung 3 kann die Maßverkörperung 4 unterschiedlich reflektierende oder lichttransmittierende Bereiche 9 aufweisen, wobei der Maßstab der Maßverkörperung 4 mit einer nicht dargestellten Lichtquelle beleuchtet wird. Bei einer magnetischen Positionsmessvorrichtung 3 weist der Maßstab der Maßverkörperung 4 hingegen magnetische Positionsmarkierungen 9 auf, die sich hinsichtlich ihrer Magnetisierung unterscheiden. Je nach Anwendungsfall kann die Maßverkörperung 4 zudem einen linearen oder kreisförmigen Maßstab aufweisen.

Gemäß dem vorliegenden Ausführungsbeispiel ist die Maßverkörperung 4 als rotatorische Maßverkörperung 4 ausgebildet. Die Maßverkörperung 4 weist eine Positionsspur 5 auf, welche die codierten Bereiche in Form von Code-Positionsmarkierungen 9 aufweist, welche nach Art eines Binärcodes 1, 2 ausgebildet sind und jeweils einem Bit des Binärcodes 1, 2 entsprechen. Die Code-Positionsmarkierungen 9 können mit Hilfe der Sensorvorrichtung 6 und insbesondere mittels einer Vielzahl an Sensorelementen 7 abgetastet werden. Die Erfassung der Bewegung der Code-Positionsmarkierung 9 der Positionsspur 5 liefert Code-Positionen, welche die Änderung der Position wiedergeben. Je nach Anwendungsfall können auch mehrere Positionsspuren 5 vorgesehen sein, so wie beispielsweise eine weitere, auch invertierte Absolutspur oder auch eine Indexspur oder Inkrementspur oder dergleichen, mittels welcher eine oder mehrere Indexmarkierungen oder Inkremente abgetastet werden können.

Während des Betriebs der Positionsmessvorrichtung 3 werden die Code-Positionsmarkierungen 9 der Positionsspur 5 gemäß dem vorliegenden Ausführungsbeispiel mit einer kreisförmigen Maßverkörperung 4 entlang einer Kreisbahn mit einem Radius um die Drehachse in Bewegungsrichtung B bewegt und von den Sensorelementen 7 der Sensorvorrichtung 6 detektiert. Hierzu kann die Maßverkörperung bevorzugt als rotatorische Maßverkörperung 4, insbesondere als Kreisscheibe oder Walze, ausgebildet sein. Alternativ kann die Maßverkörperung 4 beispielsweise auch als linearer Maßstab ausgebildet sein.

Die Code-Positionsmarkierungen 9 der Positionsspur 5 der Maßverkörperung 4 sind im vorliegenden Ausführungsbeispiel als Binärcode 1, 2 ausgebildet. Der Binärcode 1, 2 kann beispielsweise ein Pseudo-Random-Code sein, welcher mittels eines Pseudo-Zufallszahlengenerators erzeugt werden kann. Auf diese Weise wird bei einem vorgegebenen Startwert S eine scheinbar zufällige Bitfolge erzeugt, welche sich zyklisch wiederholt. Der Binärcode 1, 2 ist dabei derart ausgestaltet, dass bei einer Verschiebung immer ein neues Codewort C gebildet wird. Es entsteht auch am Ende des geschlossenen Binärcodes 1, 2, bei welchem der Startwert S wieder beginnt, keine Sprungstelle. Die Binärcodes 1, 2 können insbesondere als Schiebe-Codes ausgebildet sein. Dies bedeutet, dass beim Verschieben um eine oder mehrere Stellen ein neues, ebenfalls eindeutiges Codewort C generiert wird.

In der Fig. 1 weist die Maßverkörperung 4 einen Maßstab auf, welcher mit dem ersten Binärcode 1 codiert ist. Der erste Binärcode 1 weist eine erste Anzahl M Codewörter C auf, die jeweils eine vorgegebene Codewort-Länge L aufweisen. Die Codewort-Länge L kann je nach Bedarf gewählt werden und eine beliebige Anzahl an Bits, insbesondere, N-Bit aufweisen. Gemäß dem vorliegenden Ausführungsbeispiel weisen die Codewörter C eine Codewort-Länge L von fünf Bit auf. Die erste Anzahl M an Codewörtern C ist hier mit 32, also $2^5$ Bit, gewählt. Es sind jedoch auch andere Ausgestaltungen denkbar, bei welchen eine andere erste Anzahl M an Codewörtern C und/oder eine andere Codewort-Länge L gewählt wird. Mit Hilfe dieses Binärcodes 1 lassen sich sämtliche Code-Positionen $P_M$ eindeutig feststellen, also insbesondere lassen sich sämtliche den Codenummern zugeordnete $CN_M$ Codepositionen im Coderaum und damit die physikalischen Codepositionen $P_M$, insbesondere Winkelwerten, auf der Maßverkörperung eindeutig feststellen. Insbesondere handelt es sich bei dem verwendeten Binärcode 1 um einen vollständigen und/oder geschlossenen Binärcode 1. Ein vollständiger Code 1 ist dabei ein solcher, bei welchem alle $M = 2^L$ Bitkombinationen auftreten. Ein geschlossener Binärcode 1, 2 weist keine Sprungstelle, auch nicht vom Ende des Binärcodes 1, 2 zu dessen frei definierbaren Beginn auf.

Eine Sprungstelle im Binärcode 1, 2 wäre dabei definiert als eine nicht einschrittige stetige Änderung der Codepositionen $P_M$, $P_m$ bei Verschiebung des Schiebecodes um ein Bit. Ein Binärcode 1, 2 mit Sprungstelle erlaubt die erfindungsgemäße Ausführung und Auswertung mit Einschränkungen und/oder in Teilbereichen der Bitfolge.

Wie dies der Fig. 1b zu entnehmen ist, weist der erste Binärcode 1 vorliegend, insbesondere beginnend mit $CN_M = 0$ und der Codeposition $P_M=0$, die folgende Bitfolge auf: 01001 01100 11111 00011 01110 10100 00. Bei einer Codewort-Länge L = 5 können mit diesem vollständigen Code 1 insgesamt M = 32 Codeworte C gebildet werden, wobei sich die Codeworte C jeweils durch Schiebeoperationen um jeweils 1 Bit aus dem vorhergehenden Codewort C erzeugen lassen und eindeutig sind. Diese Codewörter C sind in der Tabelle in Fig. 1b mit den Code-Nummern $CN_M$ entsprechend hintereinander nummeriert und bilden den Coderaum. Wie dies der Tabelle ferner zu entnehmen ist, kann jedem eindeutigen Codewort C somit auch eine eindeutige physikalische Code-Position $P_M$ (in Grad) auf der Maßverkörperung 4 mit der durch den Binärcode 1 aufgespannten Codewort-Länge L zugewiesen werden. Die jeweilige Code-Nummer $CN_M$ in der Tabelle entspricht dabei der Code-Position $P_M = CN_M \times 360°/M$, wobei dem im Uhrzeigersinn letzten der L Bits eines Codeworts C die physikalische Code-Position $P_M$ zugeordnet ist. In Fig. 1a und Fig. 1b wurde das Codewort C 00000 mit der Code-Nummer $CN_M$ 0 im Coderaum und der physikalischen Code-Position $P_M = 0$ als Anfangsposition gewählt. Dem Vollwinkel mit 360° entspricht in Linearsystemen die Strecke mit den M Code-Positionen $P_M$.

Diese eindeutigen Code-Positionen $P_M$ können nun mittels der der Maßverkörperung 4 räumlich zugeordneten Sensorvorrichtung 6 ausgelesen werden. Hierzu können die Positionsmarkierungen 9 mittels der Sensorelemente 2 der Sensorvorrichtung 6 abgetastet werden. Die Sensorvorrichtung 6 weist gemäß dem vorliegenden Ausführungsbeispiel fünf Sensorelemente 7 auf, welche in radialer Richtung nebeneinander angeordnet sind. Dies entspricht im vorliegenden Fall der Codewort-Länge L. Die Erfindung ist hierauf jedoch nicht beschränkt. Vielmehr sind weitere Ausgestaltungen denkbar, bei welchen mehr oder weniger Sensorelemente 7 vorgesehen sind. Besonders bevorzugt ist, wenn die Sensorvorrichtung 6 mindestens eine Vielzahl an Sensorelementen 7 aufweist, so dass die gesamte Codewort-Länge L eines Codeworts C gleichzeitig oder nacheinander, insbesondere teilweise oder gänzlich nacheinander, erfasst werden kann.

Die Sensorelemente 7 weisen im Wesentlichen jeweils die gleiche Länge auf und sind - bis auf einen technologischen Mindestabstand - auf einer Sensorspur 11 angeordnet. Die Länge der Sensorelemente 7 ist bevorzugt an die Länge der Positionsmarkierungen 9 der Positionsspur 5 der Maßverkörperung 4 angepasst. Die Positionsmessvorrichtung 3 besitzt insoweit Sensorelemente 7 fester Größe zur Erfassung der Digitalwerte, wodurch die Länge einer Code-Positionsmarkierung 9 und damit eines Bits (in gewissen Grenzen) vorgegeben ist. Die Zuordnung des Binärcodes 1, 2 zur Position ist unveränderlich, so dass die Positionsmessvorrichtung 3 darauf ausgelegt ist, eine Maßverkörperung 4 mit dem vollständigen Binärcode 1 zu erfassen.

Für rotative Positionsmessvorrichtungen 3 bedeutet dies, dass durch die vorgegebene Länge eines Bits 9 und die feste Anzahl der Bits 9 im vollständigen Binärcode 1 auch der Radius bestimmt ist, auf dem sich die Bitfolge befinden muss. Soll nun ein kleinerer Radius verwendet werden, würden bei einem vollständigen Binärcode 1 die Längen der Bits 9 kleiner werden, wodurch diese nicht mehr korrekt von den Sensorelemente 7, insbesondere einer vorgegebenen Sensorvorrichtung 6, erfasst werden können. Soll die Länge der Sensorelemente 7 und die darauf abgestimmte Länge eines Bits 9 auf der Maßverkörperung hingegen unverändert bleiben, so kann nur ein Teilbereich des Binärcodes 1 verwendet werden. Erfindungsgemäß wird verhindert, dass bei einer Auslassung von Codeworten C Bitkombinationen ausgelesen werden, die sich zwar im vollständigen Binärcode 1, aber nicht an richtiger Stelle und damit Code-Position innerhalb des verwendeten verbleibenden Bereichs, oder die sich sogar innerhalb des ausgeschlossenen Bereichs befinden. Die von den Sensorelementen 7 erfassten Code-Positionen wären sonst beispielsweise nicht stetig oder sogar nicht eindeutig, wenn zwei Code-Positionen mit derselben Codierung existieren würden.

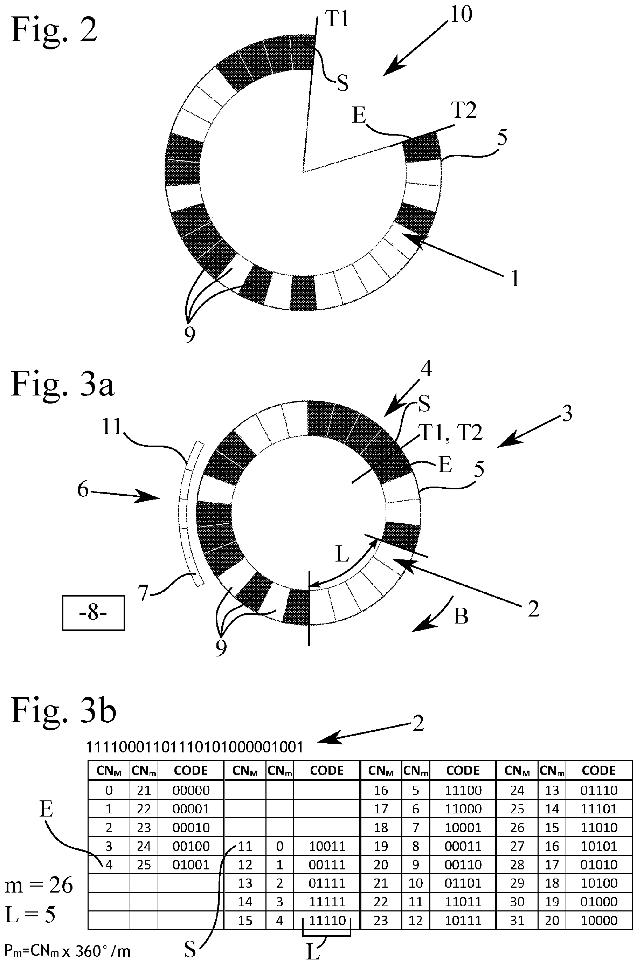

Um nun die Möglichkeit zu realisieren, eine Positionsmessvorrichtung 3 mit unterschiedlichen Maßverkörperungen 4 und insbesondere unterschiedlichen Maßverkörperungen 4 mit unterschiedlichen Durchmessern mittels eines insbesondere vorgegebenen Systems 3 handhaben zu können, wobei die Länge der Positionsmarkierungen 9 gleich bleibt, kann der Binärcode 1 derart angepasst werden, dass auf einer kleineren Maßverkörperung 4 der Binärcode 2 ein einen Teilbereich des ersten Binärcodes 1 bildender Binärcode 2 mit einer zweiten Anzahl m Codewörtern C ist, welcher auf den ersten Binärcode 1 abbildbar ist. Auf diese Weise kann ein bestimmter Teilbereich des ersten Binärcodes 1 weggelassen und dennoch eine eindeutige Code-Positionszuordnung erreicht werden. Einen solchen Binärcode 1 einer ersten für eine Anzahl M Codewörter C ausgelegten Maßverkörperung 4 mit fehlendem Teilbereich 10 zeigt beispielhaft die Darstellung in Fig. 2, wobei dieser Code 1 Trennstellen T1, T2 aufweist.

Dieser gekürzte Code 1 kann dann auf eine zweite, insbesondere kleiner ausgebildete Maßverkörperung 4 übertragen werden, wie dies beispielhaft in der Fig. 3a dargestellt ist. Insbesondere kann der zweite Binärcode 2 an den Trennstellen T1, T2 zusammengefügt werden. Wie dies beispielsweise in den Fig. 2 und Fig. 3b zu erkennen ist, wurden aus dem Binärcode 1 ein Teil der Codewörter C entfernt, vgl. beispielsweise die Codewörter C mit den Code-Nummern $CN_M$ 5 bis 10. Auf diese Weise kann der gleiche Abtaster für verschiedene Durchmesser von Maßverkörperungen 4 verwendet werden.

Der zweite Binärcode 2, welcher einen Teilcode des ersten Binärcodes 1 darstellt, ist nicht mehr vollständig, aber ebenfalls in sich geschlossen und weist ebenfalls als Schiebecode keine Sprungstelle auf. Dieses Verhalten entspricht im Wesentlichen dem Verhalten des ersten Binärcodes 1 und kann daher in vergleichbarer Art und Weise mit geringem Aufwand in der Weiterverarbeitungseinheit 8 behandelt werden.

Erfindungsgemäß ist der zweite Binärcode 2 auf den ersten Binärcode 1, insbesondere mittels einer vorgegebenen Abbildungsvorschrift, abbildbar.

Die Abbildung erfolgt derart, dass die Code-Positionen $P_m$ des zweiten Binärcodes 2 auf die Codepositionen $P_M$ des ersten Binärcodes 1 abbildbar sind. Die Abbildungsvorschrift gibt hierbei die Abbildungsbeziehung zwischen $P_m$ und $P_M$ an.

Die Abbildungsvorschrift V kann beispielsweise mittels der Formel

$$P_M = (m/M) * P_m + P_S$$

oder in gleicher Weise

$$P_m = (M/m) * (P_M - P_S)$$

beschrieben werden. Die Abbildungsbeziehung zwischen $P_m$ und $P_M$ ist fest und eindeutig, so dass mittels der vorgegebenen Abbildungsvorschrift sowohl $P_m$ auf $P_M$ also auch $P_M$ auf $P_m$ abbildbar ist. Bei der initialen Generierung des zweiten Binärcodes 2 für die jeweilige Maßverkörperung mit m < M wird der ausgeschnittene Teilbereich des ersten Binärcodes 1 derart gewählt, dass sich diese feste und eindeutige Abbildungsbeziehung ergibt. Mittels der Abbildungsvorschrift V können dann die jeweiligen Abbildungen errechnet werden.

Die Abbildungsvorschrift V beinhaltet eine Skalierung über einen Skalierungsfaktor und eine Positionsverschiebung. Dies ist erforderlich, da bei der Erfassung der kleineren Codescheibe 4 mit m Positionen einige der Positionen der großen Codescheibe 4 mit M Positionen fehlen. Die Weiterverarbeitungseinheit 8 erwartet aber bevorzugt alle Positionen der großen Codescheibe 4, wobei zugleich das Größenverhältnis berücksichtigt werden muss. Dies wird durch die Abbildung gelöst.

Auch der zweite Binärcode 2 weist eindeutige Codewörter C auf, welche jeweils einer eindeutigen Code-Position $P_m$ mit der durch die Binärcodes 1, 2 aufgespannten Codewort-Länge L zugeordnet sind. Die Codewörter C des zweiten Binärcodes 2 weisen dabei die gleiche Reihenfolge auf, wie die Codewörter C des ersten Binärcodes 1 unter Auslassung der gegenüber Binärcode 1 ausgeschnittenen Codewörter C. Der zweite Binärcode 2 ermöglicht stetige Positionswerte und weist als weiterhin geschlossener Schiebecode keine Sprungstelle auf. Binärcode 2 beginnt mit der Code-Nummer $CN_M$ 11 aus dem Binärcode 1 für den Startwert S mit neuer Code-Nummer $CN_m = 0$ und endet mit der Code-Nummer $CN_M$ 4 aus dem vollständigen Binärcode 1 an der Endposition E mit neuer Codenummer $CN_m = 25$.

Die vorgenannte Abbildungsvorschrift entspricht damit einer Verschiebung, insbesondere um eine Position $P_S$, der den Codewörtern C der Binärcodes 2 entsprechenden Code-Positionen $P_m$ und einer Skalierung durch Multiplikation der physikalischen Code-Positionen P, insbesondere als Winkelwerte des Binärcodes, um den Faktor M/m bzw. m/M.

Die jeweilige Code-Nummer $CN_m$ in der Tabelle in Fig. 3b entspricht dabei der Code-Position $P_m = CN_m \times 360°/m$.

Die Code-Nummern $CN_m$ laufen von 0 bis 25 unter Berücksichtigung des Überlaufs bezogen auf die Code-Nummern $CN_m$ des vollständigen Binärcodes 1 von $CN_M = 31$ auf $CN_M = 0$.

Die Tabelle gemäß Fig. 3b, in dem die Werte von $CN_M$ eingetragen sind, dient vor allem dem besseren Verständnis der Hintergründe der Erfindung. In der praktischen Realisierung der Erfindung braucht die Tabelle gemäß Fig. 3b nicht in der Sensorvorrichtung hinterlegt zu sein, da die Berechnung der Position $P_m$ über die in Fig. 1b dargestellte Codewandlung mit anschließender Abbildung erfolgt.

Wie dies das Ausführungsbeispiel der Fig. 3a und 3b mit einer Maßverkörperung 4 mit einem Maßstab mit einem zweiten Binärcode 2 zeigt, weist gemäß dem vorliegenden Ausführungsbeispiel der zweite Binärcode 2 die folgende Bitfolge auf: 11110 00110 11101 01000 00100 1. Diese Bitfolge ist aufgenommen an dem Code-Startwert S mit Bewegung der Maßverkörperung 4 im Uhrzeigersinn. Bei einer gleichbleibenden Codewort-Länge L = 5 können mit diesem Code 2 insgesamt m = 26 eindeutige Codeworte C gebildet werden. Wie dies der Tabelle in Fig. 3b zu entnehmen ist, kann jedem eindeutigen Codewort C somit auch eine eindeutige physikalische Code-Position $P_m$ mit der durch den Binärcode 2 aufgespannten Codewort-Länge L zugewiesen werden.

Zur Abbildung des zweiten Binärcodes 2 auf den ersten Binärcode 1 kann beispielsweise der Startwert S und die zweite Anzahl m Codewörter C oder der Startwert S und der Endwert E oder der Endwert E und die zweite Anzahl m der Codewörter C vorgegeben werden. Auf diese Weise lässt sich eine eindeutige Abbildung des zweiten Binärcodes 2 auf den ersten Binärcode 1 und damit eine Nutzbarkeit weiterer Komponenten der Positionsmessvorrichtung 3, insbesondere der Sensorelemente 7 auf der Sensorspur 11 und der Weiterverarbeitungseinheit 8, erreichen. Insbesondere kann der zweite Binärcode 2 eine Startposition Ps aufweisen, welche zur Abbildung des zweiten Binärcodes 2 auf den ersten Binärcode 1 von der jeweiligen Code-Position $P_M$, insbesondere als Winkelwert, abgezogen werden kann.

Gemäß der Tabelle in Fig. 3b entspricht beispielsweise die Codenummer $CN_m$ = 11 dem Winkelwert $P_M = CN_M \times 360°/M = 11 \times 360°/32 = 123{,}75°$ (bezogen auf $CN_M$ = 0, entsprechend 0°) auf der vollständigen Maßverkörperung 4 in Fig. 1 und der Startposition Ps auf der beschnittenen Maßverkörperung 4 in Fig. 2. Die Winkelauflösung beträgt $360°/32 = 11{,}25°$; die Codenummer $CN_M$ = 16 entspricht 180° auf der Maßverkörperung mit dem vollständigen Binärcode 1.

Die Winkelauflösung der auf die kleinere Maßverkörperung in Fig. 3a abgebildeten beschnittenen Maßverkörperung aus Fig. 2 beträgt $360°/26 = 13{,}85°$. Mit $CN_m$ = 0 (entsprechend 0°) entspricht hier $CN_m$ = 1 dem Winkel 13,85° und $CN_m$ = 13 dem Winkel 180°.

Auch die Positionsmarkierungen 9 des zweiten Binärcodes 2 können von der Sensorvorrichtung 6 aufgenommen und dann zur Weiterbehandlung an die Weiterverarbeitungseinheit 8 übermittelt werden. Die Umsetzung der Codewörter C des ersten Binärcodes 1 als auch des zweiten Binärcodes 2 in Code-Positionen $P_M$ kann dann in der Weiterverarbeitungseinheit 8, beispielsweise mittels eines Look-Up-Tables und/oder anderer mathematischer Methoden, wie beispielsweise mittels eines rückgekoppelten Schieberegisters, erfolgen. Hierfür weist die Weiterverarbeitungseinheit 8 einen Code-Wandler 12 als Funktionsblock auf. Die so jeweils ermittelte Code-Position $P_M$ kann dann von der Weiterverarbeitungseinheit 8 weiterverarbeitet und daraus weitere Signale erzeugt werden. Die Weiterverarbeitungseinheit 8 kann aus digitalen und/oder analogen Funktions- und Schaltungsblöcken 12, 13, 14 bestehen, die für die unterschiedlichen Durchmesser der Maßverkörperungen 4 und zugeordneten Coderäume gleichartig verwendet werden. Damit können beispielsweise mit einer einzigen hardwaretechnischen Realisierung der Sensorvorrichtung 6 und der Weiterverarbeitungseinheit 8 als integrierte Schaltung Maßverkörperungen 4 mit verschiedenen Durchmessern abgetastet und ausgewertet werden. Bei Positionsmessvorrichtungen 3 können beispielsweise inkrementelle A/B-Signale als Maß für Geschwindigkeit und Bewegungsrichtung generiert werden. Um für die Weiterverarbeitung des zweiten Binärcodes 2 dieselben Funktionsblöcke, also insbesondere den Funktionsblöcke des Code-Wandlers 12, den Funktionsblock des Abbilders 13 sowie nachgeschaltete Funktionsblöcke 14, verwenden zu können, wie für den ersten Binärcode 1, kann die Abbildung des zweiten Binärcodes 2 auf den ersten Binärcode 1 erfolgen.

Die Weiterverarbeitungseinheit 8 kann beispielsweise folgende Funktionsblöcke 14 aufweisen, die dem Code-Wandler 12 und/oder dem Abbilder 13 nachgeschaltet sind.

Die Weiterverarbeitungseinheit 8 stellt dabei einen Block dar, der inkrementelle Signale und/oder Kommutierungssignale erzeugt. Die Weiterverarbeitungseinheit 8 ist ferner als Zähler ausgebildet, der einen Multiturnwert bildet. Insbesondere stellt die Weiterverarbeitungseinheit 8 eine Schnittstelle dar, wie beispielsweise BiSS, SPI oder dergleichen, dar.

Wie bereits beschrieben kann der Abbilder 13 auch in den Code-Wandler 12 und/oder in einen oder mehreren dem Code-Wandler 12 nachgeschalteten Funktionsblock 14 integriert sein.

Die erfindungsgemäße Positionsmessvorrichtung 3 kann sowohl in messenden Systemen, bei welchen eine kontinuierliche Ermittlung der Position mittels einer Messung vorgenommen wird, und/oder bei zählenden Systemen 3 Anwendung finden

Mit einer erfindungsgemäßen Positionsmessvorrichtung lässt sich auf einfache Art und Weise eine Absolutposition einer Positionsmessvorrichtung 3 generieren. Es ist nicht mehr erforderlich, unterschiedliche Sensorvorrichtungen 6 und Weiterverarbeitungseinheiten 8 für Positionsmessvorrichtungen 3 für unterschiedliche Radien von Maßverkörperungen 4 vorzusehen. Durch die Abbildung des zweiten Binärcodes 2 mit einer zweiten Anzahl m Codewörtern C auf den ersten Binärcode 1 mit einer ersten Anzahl M Codewörtern C, die jeweils eine Codewortlänge L aufweisen, kann die Maßverkörperung 4 an das jeweilige System 3, insbesondere mit kleinerem Durchmesser, angepasst und die aufgenommenen Signale so ohne Probleme von einer bestehenden Weiterverarbeitungseinheit 8 weiterverarbeitet werden. Vorteilhaft kann die Erfindung daher insbesondere bei rotatorischen optischen oder magnetischen Positionsmessvorrichtungen 3 eingesetzt werden, da mit einem einzigen fixen Sensor-Layout, welches auf L Bit ausgelegt ist, und dessen Sensorelemente 7 eine feste Länge entsprechend der Länge der Positionsmarkierungen 9 besitzen, die Codewörter C in einem geschlossenen Code bestimmt werden können. Daraus folgend kann auch die jeweilige Länge des gesamten Codes 1, 2 und damit der Durchmesser der Maßverkörperung 4 bestimmt werden. Die Skalierung erfolgt auf weniger Codewörter C und damit kleinere Durchmesser der Maßverkörperung 4 proportional m/M.

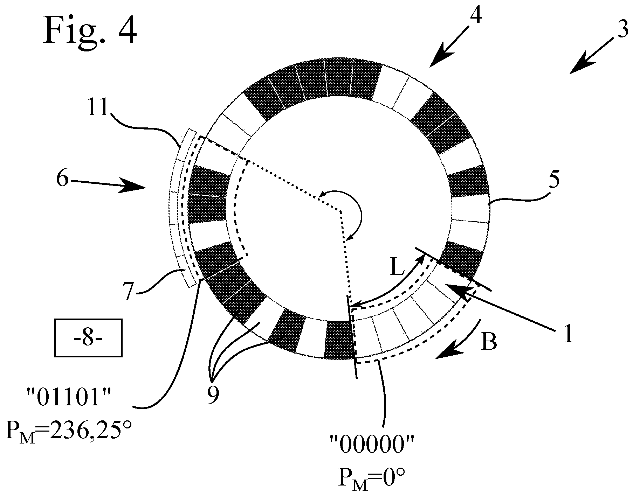

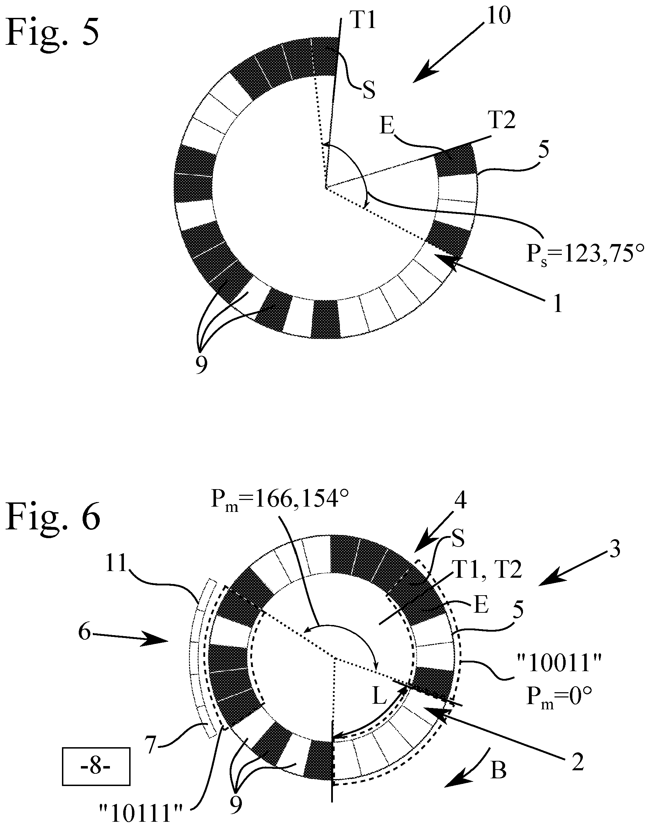

Der Verfahrensablauf des Messens mit einer erfindungsgemäßen Positionsmessvorrichtung zur Ermittlung der Drehstellung einer Maßverkörperung wird im Folgenden noch einmal anhand der Figuren 4 bis 6 detailliert beschrieben. Die Fig. 4 entspricht der Fig. 1a, die Fig. 5 entspricht der Fig. 2 und die Fig. 6 entspricht der Fig. 3a, wobei jeweils Positionsangaben exemplarisch hinzugefügt wurden.

Die Positionsmessvorrichtung 3 weist gemäß Fig. 4 eine Maßverkörperung 4 eine Sensorvorrichtung 6 und eine Weiterverarbeitungseinheit 8 auf. Auf der Maßverkörperung 4 ist ein erster Binärcode 1 vorhanden, welcher durch die Sensorvorrichtung 6 entsprechend abtastbar ist. Die Sensorvorrichtung 6 ist zur Abtastung mit Codewörtern C ausgebildet und weist im vorliegenden Beispiel fünf Sensorelemente 7 auf. Die Sensorvorrichtung 6 kann auf einem Chip integriert sein. An die Sensorvorrichtung 6 angeschlossen ist eine Weiterverarbeitungseinheit 8. Diese kann zusammen mit der Sensorvorrichtung 6 auf einem gemeinsamen Chip integriert sein.

Die Weiterverarbeitungseinheit 8 weist mehrere Funktionsblöcke auf, nämlich einen Code-Wandler 12, der die Umsetzung der Codewörter in Positionsangaben leistet, einen Abbilder 13 zur Berücksichtigung des Abbildungsverhältnisses und weitere Funktionsblöcke 14. Die Funktionsblöcke 12, 13, 14 der Weiterverarbeitungseinheit können, müssen aber nicht als separate Baueinheit ausgebildet sein. Einzelne, mehrere oder sämtliche Funktionen der Funktionsblöcke 12, 13, 14 können auch in einer gemeinsamen Baueinheit, beispielsweise in einer gemeinsamen integrierten Schaltung, realisiert sein.

Zunächst wird zum besseren Verständnis ein bekanntes Messverfahren erläutert:
In dem Ausführungsbeispiel sind die Codewörter C in einer in Fig. 1b dargestellten Tabelle zur Schiebecode-Wandlung hinterlegt. Die Code-Wandlung wird von dem Codewandler 12 durchgeführt, in dem die Umsetzung der Tabelle implementiert ist. Bevorzugt erfolgt die Code-Wandlung durch Schieberegister oder sie wird über eine gespeicherte Look-Up-Table realisiert. Es sind aber auch weitere Arten der Code-Wandlung möglich.

Jedem Codewort C ist eine entsprechende Codenummer $CN_M$ eindeutig zugeordnet, welche zur Nummerierung der Codewörter C dienen kann. Für das Ausführungsbeispiel ergibt sich eine Anzahl M=32 an Codenummern $CN_M$.

Die Sensorelemente 7 der Sensorspur 11 tasten den Binärcode 1 ab. In der in Fig. 4 dargestellten Stellung der Maßverkörperung 4 wird entsprechend das Codewort C "01101" abgetastet, welches gemäß der implementierten Code-Wandlung nach Fig. 1b dem $CN_M$-Wert "21" entspricht. Mit diesem $CN_M$-Wert wird anschließend beispielsweise rechnerisch die entsprechende Position $P_M$, welche im Ausführungsbeispiel einer Winkelposition entspricht, ermittelt. Hierfür kann die in Fig. 1b angegebene Formel dienen, wonach $P_M = 21 \times 360°/32 = 236,25°$. Das abgetastete Codewort C "01101" entspricht insofern der Position $P_M = 236,25°$ der Maßverkörperung 4. Dieses Vorgehen bis hierhin beinhaltet noch nicht die Realisierung der Erfindung.

Mit der Erfindung kann nunmehr erreicht werden, dass mit der gleichen Sensorvorrichtung 6 auch andere Maßverkörperung einsetzbar sind, z.B. weil bauraumbedingt eine kleinere Maßverkörperung erforderlich ist oder weil nur eine geringere Auflösung benötigt wird. Die Maßverkörperung 4 mit dem Binärcode 1 soll also für die weitere Erläuterung der Erfindung durch eine im Durchmesser kleinere Maßverkörperung 4 gemäß Fig. 6 ausgetauscht werden.

Die kleinere Maßverkörperung 4 gemäß Fig. 6 weist einen zweiten Binärcode 2 auf, welcher einen insbesondere zusammenhängenden Teilbereich des ersten Binärcodes 1 bildet. Der Binärcode 2 weist insofern eine kleinere Anzahl an Codewörtern C auf, nämlich m = 26, wobei diese Anzahl m der Positionsvorrichtung 3 bei Austausch der Maßverkörperung 4 vorzugeben ist. Die Sensorvorrichtung 6 und die Weiterverarbeitungseinheit 8 mitsamt dem die Code-Wandlung durchführenden Code-Wandler 12 werden beibehalten und nicht getauscht.

Tastet die Sensorvorrichtung 6 nun den zweiten Binärcode 2 ab, so wird in der in Fig. 6 dargestellten Stellung der Maßverkörperung 4 entsprechend das Codewort C "10111" abgetastet. Mit der nicht geänderten, hinterlegten Code-Wandlung gemäß Fig. 1b entspricht das abgetastete Codewort C "10111" dem Wert $CN_M$ "23". Durch diesen Wert kann analog zu dem zuvor beschriebenen Vorgehen eine Position $P_M$ ermittelt werden, wonach $P_M (CN_M=23) = 23 \times 360°/32 = 258,75°$.

Da die so ermittelte Position $P_M$ der zu dem Codewort C "10111" entsprechenden Winkelposition aber der Position auf einer größeren Maßverkörperung 4 gemäß Fig. 4 mit dem ersten Binärcode 1 entspricht, muss die aus der Code-Wandlung gemäß Fig. 1b ermittelte Position $P_M$ noch durch einen Abbilder 13 auf die tatsächliche Position $P_m$ abgebildet werden.

Dies erfolgt im vorliegenden Beispiel mittels der Abbildungsvorschrift $P_m = M/m (P_M - P_S)$. Hierbei ent-

spricht M/m einem Skalierungsfaktor, welcher sich durch die abweichende Anzahl an Codewörtern C ergibt, nämlich M = 32 und m = 26. Die Position Ps entspricht der Positionsverschiebung der Maßverkörperung 4 aus Fig. 6 gegenüber der Maßverkörperung 4 aus Fig. 4, da durch die Codekürzung eine abweichende Ausrichtung der Nullposition der kleineren Maßverkörperung erfolgt ist.

Die Anzahl M ist der Weiterverarbeitungseinheit 8 bekannt. Der Abbilder 13 kann M beispielsweise aus dem hinterlegen Codewandlung auslesen oder M kann direkt als Zahlenwert im Abbilder 13 hinterlegt sein.

Die Start-Position Ps (Fig. 5) kann beispielsweise analog zu der Ermittlung der Code-Position $P_M$ ermittelt werden, beispielsweise durch $P_S = S \times 360° / M$. Hierfür muss der Startwert S entsprechend bei Austausch der Maßverkörperung vorgegeben werden. Es ist jedoch ebenso möglich, den Endwert E und/oder direkt die Positionsverschiebung Ps vorzugeben.

Für das in Fig. 6 dargestellte Ausführungsbeispiel ergibt sich somit ein Skalierungsfaktor M/m = 32/26 = 1,231 und eine Position $P_S = 11 \times 360°/32 = 123,75°$ (Fig. 5) auf der beschnittenen Maßverkörperung. Für die Abbildung der Position $P_M = 258,75°$ auf die Position $P_m$ folgt somit $P_m = 32/26 \times (258,75°-123,75°) = 166,154°$. Dies entspricht der zu ermittelnden tatsächlichen Stelle der verkleinerten Maßverkörperung 4 gemäß Fig. 6 bezogen auf die neue Nullposition $P_m = 0°$ mit dem Code "10011" entsprechend Codenummer $CN_M = 11$ aus der Codetabelle in Fig. 3b.

Der Abbilder 13 ist so konfiguriert, dass ein zyklischer Überlauf ermittelt und berücksichtigt werden kann. Im Fall der Binärcodes 1, 2 des Ausführungsbeispiels handelt es sich um geschlossene Codes, so dass zur Anwendung der Abbildungsvorschrift bei der Differenzbildung von "$P_M-P_S$" zu beachten ist, dass dieser Term stets größer/gleich "0" sein muss. Für den Fall, dass der Differenzterm kleiner 0 ist, müssen zusätzlich 360° zu diesem vor der Skalierung addiert werden. Würde die Sensorvorrichtung 6 mit der Maßverkörperung 4 mit Binärcode 2 beispielsweise das Codewort C "00001" abtasten, so folgt aus der hinterlegten Codewandlung gemäß Fig. 1b $CN_M = 1$. Mit Position $P_M = 11,25°$ folgt für den Differenzterm $P_M-P_S = -112,5°$, welcher kleiner "0" ist. Aufgrund der zyklischen Geschlossenheit der Codes wird daher die Position $P_m = M/m (P_M-P_S+360°) = 304,615°$ ermittelt.

In dem zuvor beschriebenen Ausführungsbeispiel wurden die Positionen $P_M$ und $P_m$ als Winkelpositionen angegeben. Es ist es auch möglich, andere Positionsmaße zu verwenden. Das verwendete Positionsmaß kann insbesondere auf die Funktionsblöcke 14 der Weiterverarbeitungseinheit 8 abgestimmt sein. Sofern beispielsweise die Weiterverarbeitungseinheit 8 keine Winkelangaben benötigt, können entsprechend andere Positionsmaße verwendet werden. Beispielsweise kann das Positionsmaß auch ein Inkrementwert sein. Insbesondere ist es möglich, dass das Positionsmaß das Format der Codenummer CN selbst hat. Für diesen Fall soll ein Beispiel vorgestellt werden:

Analog zu dem zuvor beschriebenen Vorgehen wird auf der Maßverkörperung 4 gemäß Fig. 6 zunächst das Codewort C "10111" durch die Sensorvorrichtung 6 abgetastet, welches in der Codewandlung gemäß Fig. 1b dem $CN_M$-Wert "23" entspricht. Als Maß der Position $P_M$ wird jetzt aber nicht ein Winkelmaß verwendet, sondern das Format der $CN_M$ selbst, wobei rein zur Verdeutlichung im Folgenden die Bezeichnung $P'_M$ als reeller Zahlenwert verwendet wird. Der $CN_M$-Wert entspricht an dieser Stelle also der Position $P'_M$ einer Maßverkörperung 4 gemäß Fig. 4 mit dem ersten Binärcode 1 und muss noch auf die tatsächliche Position abgebildet werden.

Die Abbildung erfolgt in gleicher Weise in dem Abbilder 13 durch die bereits erläuterte Abbildungsvorschrift $P'_m = M/m (P'_M - P'_S)$, wobei die als CN-Wert ausgedrückte Position P' auch hier skaliert und verschoben wird. Während sich der Skalierungsfaktor M/m durch die unterschiedlichen Anzahlen M, m der Codenummern CN ergibt, so entspricht die Verschiebung P's dem Startwert S. Der Startwert S kann direkt vorgegeben sein. Ebenso ist es möglich, den Endwert E vorzugeben und über die Differenz der Anzahlen M und m den Startwert S zu ermitteln.

Für den zu dem Codewort C "10111" zugeordneten $CN_M$-Wert "23" ergibt sich somit ein Positionswert $P'_m = 32/26 \times (23-11) = 14,77$. Dies entspricht der zu ermittelnden tatsächlichen Stelle der Maßverkörperung 4 gemäß 6, wobei als Positionsmaß das Format der Codenummern selbst gewählt ist. Dieser Wert $P'_m$ kann von der Weiterverarbeitungseinheit 8, insbesondere der Funktionsblöcken 14, weiterverarbeitet werden.

Das Beispiel verdeutlich, dass die Abbildung unabhängig vom Maß der Positionsangabe P sein kann. Dementsprechend könnten auch noch weitere Positionsmaße verwendet werden. Vorteilhaft werden die Positionsmaße derart gewählt, dass sie von der Weiterverarbeitungseinheit 8 verarbeitbar sind.

Dieselbe Sensorvorrichtung 6 kann natürlich auch für weitere Maßverkörperungen 4 mit einer beliebigen Anzahl m ≤ M an Codewörtern eingesetzt werden. Die jeweilige Ausgestaltung der Maßverkörperung 4 wird in dem Abbilder 13 berücksichtigt, wozu dem Abbilder 13 lediglich wenige Parameter der zu verwendenden Maßverkörperung 4 vorgegeben werden müssen, insbesondere die Parameter m und Ps oder sonstige Angaben, aus denen sich diese Parameter ermitteln lassen, wie z. B. S und E.

Die Weiterverarbeitungseinheit 8 mit dem implementierten Abbilder 13 funktioniert selbstverständlich auch mit der Maßverkörperung 4 aus Fig. 4, wobei in diesem Fall gilt, dass M = m, $P_S = 0$ und damit $P_m = P_M$.

Die erfindungsgemäße Positionsvorrichtung 3 ermöglicht also durch die vorgegebene feste und eindeutige Abbildungsbeziehung zwischen dem ersten Binärcode und dem zweiten Binärcode 2 bzw. zwischen den Positionen $P_M$ und $P_m$ die Verwendung unterschiedlicher Maßverkörperungen 4 mit verschiedenen Binärcodes 1, 2 unter Beibehaltung der verwendeten Hardware, wie insbesondere der Sensorvorrichtung 6 und der Weiterverarbeitungseinheit 8, und insbesondere der einmal implementierten Code-Wandlung, so dass eine aufwändige und kostenintensive Umrüstung der Positionsmessvorrichtung 3 entfällt.

Erfindungsgemäß ist die Ausgestaltung der Maßverkörperung 4 derart gewählt, dass der zweite Binärcode 2 auf den ersten Binärcode 1 abgebildet ist. Das Abbildungsverhältnis ist fest und eindeutig, so dass sich zur Ermittlung der zu messenden Position dieses Abbildungsverhältnis zu Nutze gemacht werden kann.

**Bezugszeichen:**

| 1 | Erster Binärcode |
|---|---|
| 2 | Zweiter Binärcode |
| 3 | Positionsmessvorrichtung |
| 4 | Maßverkörperung |
| 5 | Positionsspur |
| 6 | Sensorvorrichtung |
| 7 | Sensorelemente |
| 8 | Weiterverarbeitungseinheit |
| 9 | Positionsmarkierungen |
| 10 | Teilbereich |
| 11 | Sensorspur |
| 12 | Codewandler |
| 13 | Abbilder |
| 14 | Funktionsblöcke |

| M | erste Anzahl Codewörter |
|---|---|
| m | zweite Anzahl Codewörter |
| C | Codewörter |
| L | Codewort-Länge |
| $CN_M$ | Code-Nummer in erster Codetabelle |
| $CN_m$ | Code-Nummer in zweiter Codetabelle |
| S | Startwert des Codes |
| E | Endwert des Codes |
| $P_M$ | Code-Position im ersten Binärcode |
| $P_m$ | Code-Position im zweiten Binärcode |
| Ps | Startposition |
| B | Bewegungsrichtung |
| T1, T2 | Trennstelle |
| V | Abbildungsvorschrift |

**Patentansprüche**

1. Positionsmessvorrichtung zur Messung einer Absolutposition mit einer einen Binärcode (1, 2) aufweisenden Maßverkörperung (4), die mindestens eine Positionsspur (5) mit binären Positionsmarkierungen (9) aufweist, und einer den Binärcode (1, 2) abtastenden Sensorvorrichtung (6), wobei die Sensorvorrichtung (6) zur Abtastung eines ersten Binärcodes (1) mit einer ersten Anzahl (M), die gleiche Codewort-Länge (L) aufweisenden Codewörtern (C) geeignet ausgebildet ist, **dadurch gekennzeichnet, dass** der Binärcode (2) der Maßverkörperung (4) ein einen Teilbereich des ersten Binärcodes (1) bildender Binärcode (2) mit einer zweiten, gegenüber der ersten Anzahl (M) verringerten Anzahl (m) Codewörtern (C) ist, welcher auf den ersten Binärcode (1) abbildbar ist, wobei der zweite Binärcode (2) auf den ersten Binärcode (1) mittels einer vorgegebenen, eine Skalierung enthaltende Abbildungsvorschrift eindeutig abgebildet ist.

2. Positionsmessvorrichtung nach einem der vorhergehenden Ansprüche, **dadurch gekennzeichnet, dass** die Binärcodes (1, 2) eindeutige Codewörter (C) aufweisen, welche jeweils einer eindeutigen Code-Position ($P_M$, $P_m$) mit der durch die Binärcodes (1, 2) aufgespannten Codewort-Länge (L) zugeordnet sind.

3. Positionsmessvorrichtung nach Anspruch 2, **dadurch gekennzeichnet, dass** die Code-Positionen ($P_m$) des zweiten Binärcodes (2) auf die Codepositionen ($P_M$) des ersten Binärcodes (1) insbesondere mittels einer Abbildungsvorschrift (V) abbildbar sind.

4. Positionsmessvorrichtung nach Anspruch 3, **dadurch gekennzeichnet, dass** die Abbildung unter Berücksichtigung eines Skalierungsfaktors und/oder einer Positionsverschiebung erfolgt.

5. Positionsmessvorrichtung nach Anspruch 4, **dadurch gekennzeichnet, dass** der Skalierungsfaktor die erste Anzahl (M) an Codewörtern (C) und die zweite Anzahl (m) an Codewörtern (C) ins Verhältnis zueinander setzt.

6. Positionsmessvorrichtung nach einem der Ansprüche 2 bis 5, **dadurch gekennzeichnet, dass** die Codewörter (C) des zweiten Binärcodes (2) die gleiche Reihenfolge aufweisen wie die Codewörter (C) des ersten Binärcodes (1), insbesondere in dem Teilbereich des ersten Binärcodes (1).

7. Positionsmessvorrichtung nach einem der vorhergehenden Ansprüche, **gekennzeichnet durch** eine Weiterverarbeitungseinheit (8) zur Weiterverarbeitung der abgetasteten Sensorsignale und/oder zur Umsetzung der Codewörter (C) in Code-Positionen (P).

8. Positionsmessvorrichtung nach einem der vorhergehenden Ansprüche, **dadurch gekennzeichnet, dass** die Umsetzung der Codewörter (C) in Code-Positionen ($P_M$, $P_m$) mittels eines Look-Up-Tables und/oder mittels eines rückgekoppelten Schieberegisters erfolgt.

9. Positionsmessvorrichtung nach einem der vorhergehenden Ansprüche, **dadurch gekennzeichnet, dass** der erste Binärcode (1) mit einer ersten Anzahl (M), die gleiche Codewort-Länge (L) aufweisenden Codewörter (C) ein vollständiger Code ist, insbesondere bei welchem alle möglichen M=$2^L$ Bitkombinationen auftreten.

10. Positionsmessvorrichtung nach einem der vorhergehenden Ansprüche, **dadurch gekennzeichnet, dass** der erste Binärcode (1) und/oder der zweite Binärcode (2) ein geschlossener Code (1) ist, insbesondere bei welchem beim Überschreiten des letzten Codeworts (C), insbesondere der letzten Code-Position ($P_M$, $P_m$), wieder das erste Codewort (C), insbesondere die erste Code-Position ($P_M$, $P_m$), folgt.

11. Positionsmessvorrichtung nach einem der vorhergehenden Ansprüche, **dadurch gekennzeichnet, dass** zur Abbildung des zweiten Binärcodes (2) auf den ersten Binärcode (1) eindeutige Code-Positionen (P) durch Start- und Endwert (S, E) des zweiten Binärcodes (2) innerhalb des ersten Binärcodes (1) oder durch die zweite Anzahl (m) an Codewörtern und den Start- oder Endwert (s, E) des zweiten Binärcodes (2) innerhalb des ersten Binärcodes (1) in der Weiterverarbeitungseinheit (8) vorgegeben sind.

12. Positionsmessvorrichtung nach einem der vorhergehenden Ansprüche, **dadurch gekennzeichnet, dass** der zweite Binärcode (2) eine Startposition (Ps) aufweist, welche zur Abbildung des zweiten Binärcodes (2) auf den ersten Binärcode (1) von der jeweiligen Code-Position ($P_M$) der Maßverkörperung (4) abziehbar ist.

13. Positionsmessvorrichtung nach einem der vorhergehenden Ansprüche, **dadurch gekennzeichnet, dass** die Positionsmessvorrichtung (3) als messende oder zählende Positionsmessvorrichtung (3) ausgebildet ist.

14. Verfahren zur Messung einer Absolutposition mit einer Positionsmessvorrichtung (3) zur Messung einer Absolutposition mit einer einen Binärcode (1, 2) aufweisenden Maßverkörperung (4), die mindestens eine Positionsspur (5) mit binären Positionsmarkierungen (9) aufweist, und einer den Binärcode (1, 2) abtastenden Sensorvorrichtung (6), wobei die Sensorvorrichtung (6) zur Abtastung eines ersten Binärcodes (1) mit einer ersten Anzahl (M), die gleiche Codewort-Länge (L) aufweisenden Codewörtern (C) geeignet ausgebildet ist, **dadurch gekennzeichnet, dass** der Binärcode (2) der Maßverkörperung (4) ein einen Teilbereich des ersten Binärcodes (1) bildender Binärcode (2) mit einer zweiten, gegenüber der ersten Anzahl (M) verringerten Anzahl (m) Codewörtern (C) ist, welcher auf den ersten Binärcode (1) abgebildet wird, wobei der zweite Binärcode (2) auf den ersten Binärcode (1) mittels einer vorgegebenen, eine Skalierung enthaltenden Abbildungsvorschrift eindeutig abgebildet wird.

15. Verfahren nach Anspruch 14, **dadurch gekennzeichnet, dass** die Binärcodes (1, 2) eindeutige Codewörter (C) aufweisen, welche jeweils einer eindeutigen Code-Position ($P_M$, $P_m$) mit der durch die Binärcodes (1, 2) aufgespannten Codewort-Länge (L) zugeordnet sind, und dass die Code-Positionen ($P_m$) des zweiten Binärcodes (2) auf die Codepositionen ($P_M$) des ersten Binärcodes (1) insbesondere mittels einer Abbildungsvorschrift (V) abbildbar sind.

## Claims

1. A position-measuring device for measuring an absolute position with a measuring standard (4) that has a binary code (1, 2), which has at least one position track (5) with binary position markings (9), and a sensor device (6) that scans the binary code (1, 2), wherein the sensor device (6) is suitably designed to scan a first binary code (1) that has a first number (M) of code words (C) that have the same code word length (L),
**characterized in that**
the binary code (2) of the measuring standard (4) is a binary code (2) that forms a portion of the first binary code (1) with a second number (m) of code words (C) reduced compared to the first number (M) which can be mapped onto the first binary code (1), wherein the second binary code (2) is uniquely mapped onto the first binary code (1) by means of a predefined mapping rule containing a scaling.

2. The position-measuring device as claimed in one of the preceding claims, **characterized in that** the binary codes (1, 2) comprise unique code words (C), each of which is assigned to a unique code position ($P_M$, $P_m$) with the code word length (L) over which the binary codes (1, 2) extend.

3. The position-measuring device as claimed in claim 2, **characterized in that** the code positions ($P_m$) of the second binary code (2) can be mapped onto the code positions ($P_M$) of the first binary code (1), in particular by means of a mapping rule (V).

4. The position-measuring device as claimed in claim 3, **characterized in that** the mapping takes place taking a scaling factor and/or a position displacement into account.

5. The position-measuring device as claimed in claim 4, **characterized in that** the scaling factor establishes the relationship between the first number (M) of code words (C) and the second number (m) of code words (C).

6. The position-measuring device as claimed in one of claims 2 to 5, **characterized in that** the code words (C) of the second binary code (2) have the same sequence as the code words (C) of the first binary code (1), in particular in the portion of the first binary code (1).

7. The position-measuring device as claimed in one of the preceding claims, **characterized by** a further processing unit (8) for processing the scanned sensor signals and/or for converting the code words (C) into code positions (P).

8. The position-measuring device as claimed in one of the preceding claims, **characterized in that** the conversion of the code words (C) into code positions $(P_M, P_m)$ takes place by means of a look-up table and/or by means of a feedback shift register.

9. The position-measuring device as claimed in one of the preceding claims, **characterized in that** the first binary code (1) with a first number (M) of code words (C) having the same code word length (L) is a complete code, in particular in which all possible $M=2^L$ bit combinations occur.

10. The position-measuring device as claimed in one of the preceding claims, **characterized in that** the first binary code (1) and/or the second binary code (2) is a closed code (1), in particular in which, on exceeding the last code word (C), in particular the last code position $(P_M, P_m)$, the first code word (C), in particular the first code position $(P_M, P_m)$, again follows.

11. The position-measuring device as claimed in one of the preceding claims, **characterized in that** for mapping the second binary code (2) onto the first binary code (1), unique code positions (P) are predefined through a start value and end value (S, E) of the second binary code (2) within the first binary code (1), or through the second number (m) of code words and the start value or end value (s, E) of the second binary code (2) within the first binary code (1) in the further processing unit (8).

12. The position-measuring device as claimed in one of the preceding claims, **characterized in that** the second binary code (2) has a start position (Ps), that can be subtracted from the respective code position $(P_M)$ of the measuring standard (4) to map the second binary code (2) onto the first binary code (1).

13. The position-measuring device as claimed in one of the preceding claims, **characterized in that** the position-measuring device (3) is designed as a measuring or counting position-measuring device (3).

14. A method for measuring an absolute position with a position-measuring device for measuring an absolute position with a measuring standard (4) that has a binary code (1, 2), which has at least one position track (5) with binary position markings (9), and a sensor device (6) that scans the binary code (1, 2), wherein the sensor device (6) is suitably designed to scan a first binary code (1) that has a first number (M) of code words (C) that have the same code word length (L),
**characterized in that**
the binary code (2) of the measuring standard (4) is a binary code (2) that forms a portion of the first binary code (1) with a second number (m) of code words (C) reduced compared to the first number (M) which can be mapped onto the first binary code (1), wherein the second binary code (2) is uniquely mapped onto the first binary code (1) by means of a predefined mapping rule containing a scaling.

15. The method as claimed in claim 14, **characterized in that** the binary codes (1, 2) have unique code words (C), each of which is assigned to a unique code position $(P_M, P_m)$ with the code word length (L) over which the binary codes (1, 2) extend, **in that** the code positions $(P_m)$ of the second binary code (2) can be mapped onto the code positions $(P_M)$ of the first binary code (1), in particular by means of a mapping rule (V).

**Revendications**

1. Dispositif de mesure de position destiné à mesurer une position absolue à l'aide d'un étalon de mesure (4), qui est pourvu d'un code binaire (1, 2) et qui comporte au moins une piste de position (5) pourvue de repères de position binaires (9), et à l'aide d'un dispositif capteur (6) qui balaie le code binaire (1, 2), le dispositif capteur (6) étant conçu de manière appropriée pour balayer un premier code binaire (1) comportant un premier nombre (M) de mots de code (C) ayant la même longueur de mot de code (L),
**caractérisé en ce que**
le code binaire (2) de l'étalon de mesure (4) est un code binaire (2) formant une sous-zone du premier code binaire (1) et comportant un deuxième nombre (m) de mots de code (C), qui est réduit par rapport au premier nombre (M) et qui peut être l'objet d'une application sur le premier code binaire (1), le deuxième code binaire (2) étant l'objet d'une application univoque sur le premier code binaire (1) au moyen d'une règle d'application spécifiée contenant une mise à l'échelle.

**2.** Dispositif de mesure de position selon l'une des revendications précédentes, **caractérisé en ce que** les codes binaires (1, 2) comportent des mots de code (C) univoques, qui sont chacun associés à une position de code univoque ($P_M$, $P_m$) avec la longueur de mot de code (L) définie par les codes binaires (1, 2).

**3.** Dispositif de mesure de position selon la revendication 2, **caractérisé en ce que** les positions de code ($P_m$) du deuxième code binaire (2) peuvent être l'objet d'une application sur les positions de code ($P_M$) du premier code binaire (1), notamment au moyen d'une règle d'application (V).

**4.** Dispositif de mesure de position selon la revendication 3, **caractérisé en ce que** l'application est effectuée avec prise en compte d'un facteur d'échelle et/ou d'un décalage de position.

**5.** Dispositif de mesure de position selon la revendication 4, **caractérisé en ce que** le facteur d'échelle établit un rapport entre le premier nombre (M) de mots de code (C) et le deuxième nombre (m) de mots de code (C).

**6.** Dispositif de mesure de position selon l'une des revendications 2 à 5, **caractérisé en ce que** les mots de code (C) du deuxième code binaire (2) ont le même ordre que les mots de code (C) du premier code binaire (1), notamment dans la sous-zone du premier code binaire (1).

**7.** Dispositif de mesure de position selon l'une des revendications précédentes, **caractérisé par** une unité de post-traitement (8) destiné à effectuer un post-traitement sur les signaux de capteur analysés et/ou à convertir les mots de code (C) en positions de code (P).

**8.** Dispositif de mesure de position selon l'une des revendications précédentes, **caractérisé en ce que** les mots de code (C) sont convertis en positions de code ($P_M$, $P_m$) au moyen d'une table de correspondance et/ou au moyen d'un registre à décalage de rétroaction.

**9.** Dispositif de mesure de position selon l'une des revendications précédentes, **caractérisé en ce que** le premier code binaire (1) comportant un premier nombre (M) de mots de code (C) et ayant la même longueur de mot de code (L) est un code complet, en particulier dans lequel toutes les combinaisons de bits possibles $M=2^L$ se produisent.

**10.** Dispositif de mesure de position selon l'une des revendications précédentes, **caractérisé en ce que** le premier code binaire (1) et/ou le deuxième code binaire (2) est un code fermé (1), notamment dans lequel le premier mot de code (C), en particulier la première position de code ($P_M$, $P_m$), suit à nouveau en cas de dépassement du dernier mot de code (C), en particulier de la dernière position de code ($P_M$, $P_m$).

**11.** Dispositif de mesure de position selon l'une des revendications précédentes, **caractérisé en ce que**, pour réaliser une application du deuxième code binaire (2) sur le premier code binaire (1), des positions de code univoques (P) sont spécifiées par des valeurs de début et de fin (S, E) du deuxième code binaire (2) à l'intérieur du premier code binaire (1) ou par le deuxième nombre (m) de mots de code et la valeur de début ou de fin (s, E) du deuxième code binaire (2) à l'intérieur du premier code binaire (1) dans l'unité de post-traitement (8).

**12.** Dispositif de mesure de position selon l'une des revendications précédentes, **caractérisé en ce que** le deuxième code binaire (2) a une position de départ (Ps) qui peut être déduite de la position de code respective ($P_M$) de l'étalon de mesure (4) pour effectuer l'application du deuxième code binaire (2) sur le premier code binaire (1).

**13.** Dispositif de mesure de position selon l'une des revendications précédentes, **caractérisé en ce que** le dispositif de mesure de position (3) est conçu comme un dispositif de mesure de position (3) effectuant la mesure ou le comptage.

**14.** Procédé de mesure d'une position absolue au moyen d'un dispositif de mesure de position (3) destiné à mesurer une position absolue à l'aide d'un étalon de mesure (4), qui est pourvu d'un code binaire (1, 2) et qui comporte au moins une piste de position (5) pourvue de des repères de position binaires (9), et à l'aide d'un dispositif capteur (6) qui balaie le code binaire (1, 2), le dispositif capteur (6) étant conçu de manière appropriée pour balayer un premier code binaire (1) comportant un premier nombre (M) de mots de code (C) ayant la même longueur de mot de code (L), **caractérisé en ce que** le code binaire (2) de l'étalon de mesure (4) est un code binaire (2) formant une sous-zone du premier code binaire (1) comprenant un deuxième nombre (m) de mots de code (C), qui est réduit par rapport au premier nombre (M) et qui est l'objet d'une application sur le premier code binaire (1), le deuxième code binaire (2) étant l'objet d'une application univoque sur le premier code binaire (1) au moyen d'une règle d'application spécifiée contenant une mise à l'échelle.

**15.** Procédé selon la revendication 14, **caractérisé en ce que** les codes binaires (1, 2) comportent des mots de code univoques (C), qui sont chacun associés à une position de code univoque ($P_M$, $P_m$) avec la longueur de mot de code (L) définie par les codes binaires (1, 2) et **en ce que** les positions de code ($P_m$) du deuxième code binaire (2) peuvent être l'objet d'une application sur les positions de code ($P_M$) du premier code binaire (1), notamment au moyen d'une règle d'application (V).

# Fig. 1a

-8-

# Fig. 1b

01001011001111100011011101010000 ← 1

| $CN_M$ | C | $CN_M$ | C | $CN_M$ | C | $CN_M$ | C |
|---|---|---|---|---|---|---|---|
| 0 | 00000 | 8 | 10110 | 16 | 11100 | 24 | 01110 |
| 1 | 00001 | 9 | 01100 | 17 | 11000 | 25 | 11101 |
| 2 | 00010 | 10 | 11001 | 18 | 10001 | 26 | 11010 |
| 3 | 00100 | 11 | 10011 | 19 | 00011 | 27 | 10101 |
| 4 | 01001 | 12 | 00111 | 20 | 00110 | 28 | 01010 |
| 5 | 10010 | 13 | 01111 | 21 | 01101 | 29 | 10100 |
| 6 | 00101 | 14 | 11111 | 22 | 11011 | 30 | 01000 |
| 7 | 01011 | 15 | 11110 | 23 | 10111 | 31 | 10000 |

$M = 32$

$L = 5$

$P_M = CN_M \times 360°/M$

## Fig. 2

## Fig. 3a

-8-

## Fig. 3b

111100011011101010000001001

| CN$_M$ | CN$_m$ | CODE | CN$_M$ | CN$_m$ | CODE | CN$_M$ | CN$_m$ | CODE | CN$_M$ | CN$_m$ | CODE |
|---|---|---|---|---|---|---|---|---|---|---|---|
| 0 | 21 | 00000 | | | | 16 | 5 | 11100 | 24 | 13 | 01110 |
| 1 | 22 | 00001 | | | | 17 | 6 | 11000 | 25 | 14 | 11101 |
| 2 | 23 | 00010 | | | | 18 | 7 | 10001 | 26 | 15 | 11010 |
| 3 | 24 | 00100 | 11 | 0 | 10011 | 19 | 8 | 00011 | 27 | 16 | 10101 |
| 4 | 25 | 01001 | 12 | 1 | 00111 | 20 | 9 | 00110 | 28 | 17 | 01010 |
| | | | 13 | 2 | 01111 | 21 | 10 | 01101 | 29 | 18 | 10100 |
| | | | 14 | 3 | 11111 | 22 | 11 | 11011 | 30 | 19 | 01000 |
| | | | 15 | 4 | 11110 | 23 | 12 | 10111 | 31 | 20 | 10000 |

E

m = 26

L = 5

$P_m = CN_m \times 360°/m$

S   L

Fig. 4

-8-

"01101"
$P_M = 236{,}25°$

"00000"
$P_M = 0°$

Fig. 5

T1

10

S

E

T2

5

$P_s=123{,}75°$

1

9

Fig. 6

$P_m=166{,}154°$

4

S

11

T1, T2

3

E

5

6

"10011"
$P_m=0°$

L

-8-

B

2

7

"10111"

9

Fig. 7

3

C

$P_M$

$P_m$

7

4

6

12

8

13

14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011050834 A1
- DE 102014112459 A1
- US 5998784 A
- DE 69308034 T2